(19) **Europäisches Patentamt**
**European Patent Office**
**Office européen des brevets**

(11) **EP 4 712 047 A1**

(12) **EUROPEAN PATENT APPLICATION**

(43) Date of publication:
**18.03.2026 Bulletin 2026/12**

(21) Application number: **25202055.7**

(22) Date of filing: **15.09.2025**

(51) International Patent Classification (IPC):
***G06V 10/82*** *(2022.01)* ***G06V 30/412*** *(2022.01)*
***G06V 30/418*** *(2022.01)*

(52) Cooperative Patent Classification (CPC):
**G06V 10/82; G06V 30/412; G06V 30/418**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **17.09.2024 US 202418887501**

(71) Applicant: **UiPath, Inc.**
**New York NY 10017 (US)**

(72) Inventors:
- **PETRESCU, Alexandru**
 **New York, 10017 (US)**
- **MIRON, Ion**
 **New York, 10017 (US)**
- **STEFANESCU, Victor**
 **New York, 10017 (US)**
- **CIOVIRTA, Marian**
 **New York, 10017 (US)**

(74) Representative: **Ungria López, Javier**
**Avda. Ramón y Cajal, 78**
**28043 Madrid (ES)**

(54) **CLIPBOARD ARTIFICIAL INTELLIGENCE SYSTEM AND APPLICATIONS FOR INTERPRETING AND PROCESSING CONTENT FROM MOBILE DEVICES**

(57) Artificial intelligence (AI)-driven, automatic data transfer including semantic associations between a source from a mobile device and a target computing system is disclosed. A digital photograph of the contents of physical documents or a screen of another computing system is obtained with the mobile device, the contents from the digital photograph are extracted, and pertinent target application(s) are determined using AI. The extracted, semantically matched contents are then entered into target application(s) of the target computing system without requiring manual entry by a user.

**EP 4 712 047 A1**

**Description**

FIELD

The present invention relates to processing digital content, and more particularly, to obtaining a digital photograph of the contents of physical documents or a screen of another computing system with a mobile device, extracting the contents from the digital photograph and determining a pertinent target application using artificial intelligence (AI), and entering the extracted contents into a target application of a computing system without requiring manual entry by a user.

BACKGROUND

Currently, there is an absence of an efficient and convenient way to copy real-life documents and photographs of screens of another computing system. Manually entering data into various business applications can be cumbersome. The lack of a convenient solution can hamper individuals who regularly handle physical documents and require digital copies for various purposes, for example. For instance, an employee that goes on a business trip can have receipts for multiple expenses. This particular individual will not have a convenient and efficient way to quickly upload the expenses into expense report(s) on his or her desktop computer without manual entry.

In another example, an individual has to manually enter accounting data from a physical document into a spreadsheet or manually input passport information into a passport application. The individual would lose time that could be more effectively spend performing other tasks. Accordingly, an improved and/or alternative approach to digitally capturing and deriving content, determining the pertinent target application and computing system, and entering this information into the target application may be beneficial.

SUMMARY

Certain embodiments of the present invention may provide solutions to the problems and needs in the art that have not yet been fully identified, appreciated, or solved by current software automation technologies, and/or provide a useful alternative thereto. For example, some embodiments of the present invention pertain to obtaining a digital photograph of the contents of physical documents or a screen of another computing system with a mobile device, extracting the contents from the digital photograph and determining a pertinent target application using AI, and entering the extracted contents into a target application of a computing system without requiring manual entry by a user.

In an embodiment, one or more non-transitory computer-readable media store one or more computer programs. The one or more computer programs are configured to cause at least one processor to extract information from one or more digital photographs of one or more documents, one or more screens of an application from a target computing system, or both, via one or more AI models configured to perform Computer Vision (CV) and Optical Character Recognition (OCR). The one or more computer programs are also configured to cause the at least one processor to determine one or more target applications that the extracted information pertains to using a categorization AI model and semantically match the extracted information to respective fields in the one or more target applications using one or more semantic matching AI models. The one or more computer programs are further configured to cause the at least one processor to transmit one or more identifications of the one or more target applications and the semantically matched information to a mobile device or the target computing system.

In another embodiment, a computer-implemented method for performing AI-driven, automatic data transfer comprising semantic associations between a source from a mobile device and a target computing system includes determining, by one or more computing systems; one or more target applications that information extracted from one or more digital photographs pertains to using a categorization AI model. The computer-implemented method also includes semantically matching the extracted information to respective fields in the one or more target applications, by the one or more computing systems, using one or more semantic matching AI models. The computer-implemented method further includes transmitting one or more identifications of the one or more target applications and the semantically matched information, by the one or more computing systems, to a mobile device or the target computing system.

In yet another embodiment, one or more computing systems include memory storing computer program instructions and at least one processor configured to execute the computer program instructions. The computer program instructions are configured to cause the at least one processor to extract information from one or more digital photographs of one or more documents, one or more screens of an application from a target computing system, or both, via one or more AI models configured to perform CV and OCR. The computer program instructions are also configured to cause the at least one processor to determine one or more target applications that the extracted information pertains to using a categorization AI model and semantically match the extracted information to respective fields in the one or more target applications using one or more semantic matching AI models. The computer program instructions are further configured to cause the at least one processor to determine identifying information for the target computing system comprising an Internet Protocol (IP) address, a Media Access Control (MAC) address, or both, and transmit one or more identifications of the one or more target applications and the semantically matched information to a mobile device or the target computing system using the determined identifying information.

BRIEF DESCRIPTION OF THE DRAWINGS

In order that the advantages of certain embodiments of the invention will be readily understood, a more particular description of the invention briefly described above will be rendered by reference to specific embodiments that are illustrated in the appended drawings. While it should be understood that these drawings depict only typical embodiments of the invention and are not therefore to be considered to be limiting of its scope, the invention will be described and explained with additional specificity and detail through the use of the accompanying drawings, in which:

FIG. 1 is an architectural diagram illustrating a hyper-automation system, according to an embodiment of the present invention.
FIG. 2 is an architectural diagram illustrating an RPA system, according to an embodiment of the present invention.
FIG. 3 is an architectural diagram illustrating a deployed RPA system, according to an embodiment of the present invention.
FIG. 4 is an architectural diagram illustrating the relationship between a designer, activities, and drivers, according to an embodiment of the present invention.
FIG. 5 is an architectural diagram illustrating a computing system configured to perform part of AI-driven, automatic data transfer including semantic associations between a source and a target application, according to an embodiment of the present invention.
FIG. 6A illustrates an example of a neural network that has been trained to supplement operation of a content extraction and application identification system, according to an embodiment of the present invention.
FIG. 6B illustrates an example of a neuron, according to an embodiment of the present invention.
FIG. 7 is a flowchart illustrating a process for training AI/ML model(s), according to an embodiment of the present invention.
FIG. 8 illustrates AI/ML models of an information extraction system, according to an embodiment of the present invention.
FIG. 9 is a diagram illustrating a system configured to perform AI-driven, automatic data transfer including semantic associations between a physical document source or a screen of another computing system digitally captured by a mobile device and a target application running on the other computing system, according to an embodiment of the present invention.
FIG. 10 is a diagram illustrating a system that is configured to perform AI-driven, automatic data transfer including semantic associations between a physical document source or a screen of another computing system digitally captured by a mobile device and a target application running on the other computing system, according to an embodiment of the present invention.
FIG. 11 is a flowchart illustrating a process for performing AI-driven, automatic data transfer between a mobile device and a target computing system, according to an embodiment of the present invention.
FIG. 12 is a flowchart illustrating another process for performing AI-driven, automatic data transfer between a mobile device and a target computing system, according to an embodiment of the present invention.
FIG. 13 is a screenshot illustrating an example of finding the center of a screen, according to an embodiment of the present invention.

Unless otherwise indicated, similar reference characters denote corresponding features consistently throughout the attached drawings.

DETAILED DESCRIPTION OF THE EMBODIMENTS

Some embodiments pertain to AI-driven, automatic data transfer including semantic associations between a source from a mobile device and a target computing system, such as a desktop/laptop computer. In other words, such embodiments may obtain a digital photograph of the contents of physical documents or a screen of another computing system with a mobile device, extract the contents from the digital photograph and determine a pertinent target application using AI, and enter the extracted contents into a target application of a computing system without requiring manual entry by a user. This may be accomplished by mapping elements found in the image captured by the mobile device to elements found in screens of target applications, generating confidence scores, and selecting the highest confidence score as the target application, for example. In some embodiments, a minimum threshold may be required for a successful identification, and a notification may be provided to the user if no matching candidates were found.

A user can take photographs of various physical documents and/or a screen of the target computing system. The physical documents can pertain to invoices, financial information, a user's identity (e.g., drivers licenses, passports, and the like), etc. Such embodiments may provide a straightforward, efficient, and convenient way to transfer this information into the appropriate application of the target computing system.

In some embodiments, a user of a mobile device takes a digital photograph of the physical document(s) and/or screen(s) of a target computing system using a standard photo application one the phone or a custom application that is designed to capture such content. The application then sends the photograph(s) to a server-side AI application that may reside in a cloud system, for example. The AI application extracts the content from the photograph(s) using Computer Vision (CV) and Optical Character Recognition (OCR) models, for example, and determines the pertinent application(s) for this content using an application identification model, which may include but is not limited to the categorization models discussed later herein. A semantic understanding model may then be employed to determine how to format the extracted information to semantically copy it to the target application(s). See, for example, U.S. Patent Application Publication Nos. 2023/0108015, 2023/0107316, and 2023/0415338.

The AI application determines the identity of the target computing system. This may be accomplished in a variety of ways, such as via an Internet Protocol (IP) address, a Media Access Control (MAC) address assigned to a network interface controller (NIC). etc. stored in a database, via such information transmitted to the AI application by the mobile device (e.g., stored in the application on the mobile device, obtained by the application by pairing with the target computing system using Bluetooth® or another appropriate short-range wireless communication protocol, etc.), or any other suitable mechanism. The AI application then sends the information extracted from the photograph(s) and the identit(ies) of the pertinent target application(s) to an RPA robot or other suitable "clipboard" application capable of copying the content into the target application(s). The RPA robot or other clipboard application then does so, and the user can submits the information, modify the information, etc.

In some embodiments, the mobile device may serve as the go-between for the information to be copied. For instance, in such embodiments, the process of capturing and sending the photograph(s) to the server may be as in the example above. However, once the content is extracted, the target application(s) are determined, and the extracted content is semantically mapped, the AI application sends this information back to the mobile device. The application thereon then uses the short-range wireless communication protocol to provide this information to the target computing system, and the RPA robot or other clipboard application thereon copies the information into the target application(s).

In certain embodiments, the mobile device is capable of performing the AI operations itself. In other words, the mobile device stores the AI models and the application on the mobile device, via the AI models, extracts the content, determines the target application(s), performs semantic matching, and sends the semantically matched content to the target computing system, where the RPA robot or other clipboard application copies this information into the target application(s).

It should be noted that in many cases, a copy-and-paste operation may involve multiple screens from the source, the target, or both. Also, screens from multiple applications may be used for entry into screen(s) from the target application, or vice versa. The AI model(s) may be trained to recognize that the overall copy-and-paste task involves multiple screens for completion (e.g., by recognizing that the same end state has been reached, such as a submission). In such a case, persistent data structures may be used to store data from the source for copying to the target. Indeed, a corresponding label and field for a corresponding label and value from the first screen may not appear until the second screen of the target, the target may have most or all labels/fields corresponding to labels/values from multiple screens of the target in a single screen, etc. A custom class or an existing data structure provided by a programming language (e.g., struct, array (single or multi-dimensional), dict, etc.) may be used to provide persistent storage. As many iterations of taking photographs and processing the information therein may be performed as required for the pertinent functionality for the target application(s).

In certain embodiments, AI model(s) may detect that a copy-and-paste operation is likely in progress. For instance, the AI model(s) or deterministic logic could detect that multiple copy-and-paste operations between individual fields in a source and a target screen occurred, and then ask the user whether to attempt the operation automatically. In some embodiments, the AI model(s) or deterministic logic may first verify that the interfaces for the suspected source/-target are field/label-based interfaces. If one or more fields are not matched correctly, the user may provide corrections.

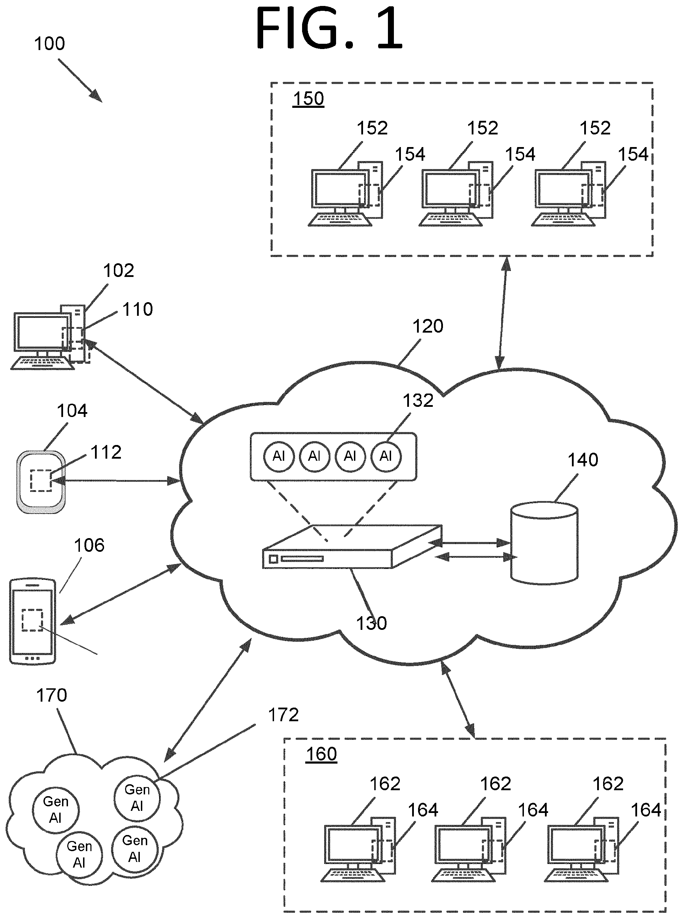

FIG. 1 is an architectural diagram illustrating a hyper-automation system 100, according to an embodiment of the present invention. "Hyper-automation," as used herein, refers to automation systems that bring together components of process automation, integration tools, and technologies that amplify the ability to automate work. For instance, robotic process automation (RPA) may be used at the core of a hyper-automation system in some embodiments, and in certain embodiments, automation capabilities may be expanded with AI / machine learning (ML), process mining, analytics, and/or other advanced tools. As the hyper-automation system learns processes, trains AI/ML models, and employs analytics, for example, more and more knowledge work may be automated, and computing systems in an organization, e.g., both those used by individuals and those that run autonomously, may all be engaged to be participants in the hyper-automation process. Hyper-automation systems of some embodiments allow users and organizations to efficiently and effectively discover, understand, and scale automations.

Hyper-automation system 100 includes user computing systems, such as desktop computer 102, tablet 104, and smart phone 106. However, any desired user computing system may be used without deviating from the scope of the invention including, but not limited to, smart watches, laptop computers, servers, Internet-of-Things (IoT) devices, etc. Also, while three user computing systems are shown in FIG. 1, any suitable number of user computing systems may be used without deviating from the scope of the invention. For instance, in some embodiments, dozens, hundreds, thousands, or millions of user computing systems may be used. The user computing systems may be actively used by a user or run automatically without much or any user input.

Each user computing system 102, 104, 106 has respective automation process(es) 110, 112, 114 running thereon. In some embodiments, the automation processes are stored remotely (e.g., on server 130 or in database 140 and accessed via network 120) and loaded by RPA robots to implement the automation. Automations may exist as a script (e.g., Extensible Markup Language (XML), Extensible Application Markup Language (XAML), etc.) or be compiled into machine readable code (e.g., as a digital link library).

Automation process(es) 110, 112, 114 may include, but are not limited to, RPA robots, part of an operating system, downloadable application(s) for the respective computing system, any other suitable software and/or hardware, or any combination of these without deviating from the scope of the invention. In some embodiments, one or more of process(es) 110, 112, 114 may be listeners. Listeners may be RPA robots, part of an operating system, a downloadable application for the respective computing system, or any other software and/or hardware without deviating from the scope of the invention. Indeed, in some embodiments, the logic of the listener(s) is implemented partially or completely via physical hardware.

Listeners monitor and record data pertaining to user interactions with respective computing systems and/or operations of unattended computing systems and send the data to a core hyper-automation system 120 via a network (e.g., a local area network (LAN), a mobile communications network, a satellite communications network, the Internet, any combination thereof, etc.). The data may include, but is not limited to, which buttons were clicked, where a mouse was moved, the text that was entered in a field, that one window was minimized and another was opened, the application associated with a window, etc. In certain embodiments, the data from the listeners may be sent periodically as part of a heartbeat message. In some embodiments, the data may be sent to core hyper-automation system 120 once a predetermined amount of data has been collected, after a predetermined time period has elapsed, or both. One or more servers, such as server 130, receive and store data from the listeners in a database, such as database 140.

Automation processes may execute the logic developed in workflows during design time. In the case of RPA, workflows may include a set of steps, defined herein as "activities," that are executed in a sequence or some other logical flow. Each activity may include an action, such as clicking a button, reading a file, writing to a log panel, etc. In some embodiments, workflows may be nested or embedded.

Long-running workflows for RPA in some embodiments are master projects that support service orchestration, human intervention, and long-running transactions in unattended environments. See, for example, U.S. Patent No. 10,860,905, which is hereby incorporated by reference in its entirety. Human intervention comes into play when certain processes require human inputs to handle exceptions, approvals, or validation before proceeding to the next step in the activity. In this situation, the process execution is suspended, freeing up the RPA robots until the human task completes.

A long-running workflow may support workflow fragmentation via persistence activities and may be combined with invoke process and non-user interaction activities, orchestrating human tasks with RPA robot tasks. In some embodiments, multiple or many computing systems may participate in executing the logic of a long-running workflow. The long-running workflow may run in a session to facilitate speedy execution. In some embodiments, long-running workflows may orchestrate background processes that may contain activities performing API calls and running in the long-running workflow session. These activities may be invoked by an invoke process activity in some embodiments. A process with user interaction activities that runs in a user session may be called by starting a job from a conductor activity (conductor described in more detail later herein). The user may interact through tasks that require forms to be completed in the conductor in some embodiments. Activities may be included that cause the RPA robot to wait for a form task to be completed and then resume the long-running workflow.

One or more of automation process(es) 110, 112, 114 is in communication with core hyper-automation system 120. In some embodiments, core hyper-automation system 120 may run a conductor application on one or more servers, such as server 130. While one server 130 is shown for illustration purposes, multiple or many servers that are proximate to one another or in a distributed architecture may be employed without deviating from the scope of the invention. For instance, one or more servers may be provided for conductor functionality, AI/ML model serving, authentication, governance, and or any other suitable functionality without deviating from the scope of the invention. In some embodiments, core hyper-automation system 120 may incorporate or be part of a public cloud architecture, a private cloud architecture, a hybrid cloud architecture, etc. In certain embodiments, core hyper-automation system 120 may host multiple software-based servers on one or more computing systems, such as server 130. In some embodiments, one or more servers of core hyper-automation system 120, such as server 130, may be implemented via one or more virtual machines (VMs).

In some embodiments, one or more of automation process(es) 110, 112, 114 may call one or more AI/ML models 132 deployed on or accessible by core hyper-automation system 120 and trained to accomplish various tasks. For instance, AI/ML models 132 may include models trained to look for various application versions, perform CV, perform OCR, user interface (UI) descriptors, offer suggestions for next activities or sequences of activities in RPA workflows, etc. AI/ML models may be trained using labeled data that includes, but is not limited to, elements from data sources (e.g., web pages, forms, scanned documents, application interfaces, screens, etc.), previously created RPA workflows, screenshots of various application screens for various versions with their corresponding UI elements, libraries of UI objects, etc. AI/ML models 132 may be trained to achieve a desired confidence threshold while not being overfit to a given set of training data.

AI/ML models 132 may be trained for any suitable purpose without deviating from the scope of the invention, as will be discussed in more detail later herein. Two or more of AI/ML models 132 may be chained in some embodiments (e.g., in series, in parallel, or a combination thereof) such that they collectively provide collaborative output(s). AI/ML models 132 may perform or assist with CV, OCR, document processing and/or understanding, semantic learning and/or analysis, analytical predictions, process discovery, task mining, testing, automatic RPA workflow generation, sequence extraction, clustering detection, audio-to-text translation, any combination thereof, etc. However, any desired number and/or type(s) of AI/ML models may be used without deviating from the scope of the invention. Using multiple AI/ML models may allow the system to develop a global picture of what is happening on a given computing system, for example. For instance, one AI/ML model could perform OCR, another could detect buttons, another could compare sequences, etc. Patterns may be determined individually by an AI/ML model or collectively by multiple AI/ML models. In certain embodiments, one or more AI/ML models are deployed locally on at least one of computing systems 102, 104, 106.

In some embodiments, multiple AI/ML models 132 may be used. Each AI/ML model 132 is an algorithm (or model) that runs on the data, and the AI/ML model itself may be a deep learning neural network (DLNN) of trained artificial "neurons" that are trained on training data, for example. In some embodiments, AI/ML models 132 may have multiple layers that perform various functions, such as statistical modeling (e.g., hidden Markov models (HMMs)), and utilize deep learning techniques (e.g., long short term memory (LSTM) deep learning, encoding of previous hidden states, etc.) to perform the desired functionality.

Hyper-automation system 100 may provide four main groups of functionality in some embodiments: (1) discovery; (2) building automations; (3) management; and (4) engagement. Automations (e.g., run on a user computing system, a server, etc.) may be run by software robots, such as RPA robots, in some embodiments. For instance, attended robots, unattended robots, and/or test robots may be used. Attended robots work with users to assist them with tasks (e.g., via UiPath Assistant™). Unattended robots work independently of users and may run in the background, potentially without user knowledge. Test robots are unattended robots that run test cases against applications or RPA workflows. Test robots may be run on multiple computing systems in parallel in some embodiments.

The discovery functionality may discover and provide automatic recommendations for different opportunities of automations of business processes. Such functionality may be implemented by one or more servers, such as server 130. The discovery functionality may include providing an automation hub, process mining, task mining, and/or task capture in some embodiments. The automation hub (e.g., UiPath Automation Hub™) may provide a mechanism for managing automation rollout with visibility and control. Automation ideas may be crowdsourced from employees via a submission form, for example. Feasibility and return on investment (ROI) calculations for automating these ideas may be provided, documentation for future automations may be collected, and collaboration may be provided to get from automation discovery to build-out faster.

Process mining (e.g., via UiPath Automation Cloud™ and/or UiPath AI Center™) refers to the process of gathering and analyzing the data from applications (e.g., enterprise resource planning (ERP) applications, customer relation management (CRM) applications, email applications, call center applications, etc.) to identify what end-to-end processes exist in an organization and how to automate them effectively, as well as indicate what the impact of the automation will be. This data may be gleaned from user computing systems 102, 104, 106 by listeners, for example, and processed by servers, such as server 130. One or more AI/ML models 132 may be employed for this purpose in some embodiments. This information may be exported to the automation hub to speed up implementation and avoid manual information transfer. The goal of process mining may be to increase business value by automating processes within an organization. Some examples of process mining goals include, but are not limited to, increasing profit, improving customer satisfaction, regulatory and/or contractual compliance, improving employee efficiency, etc.

Task mining (e.g., via UiPath Automation Cloud™ and/or UiPath AI Center™) identifies and aggregates workflows (e.g., employee workflows), and then applies AI to expose patterns and variations in day-to-day tasks, scoring such tasks for ease of automation and potential savings (e.g., time and/or cost savings). One or more AI/ML models 132 may be employed to uncover recurring task patterns in the data. Repetitive tasks that are ripe for automation may then be identified. This information may initially be provided by listeners and analyzed on servers of core hyper-automation system 120, such as server 130, in some embodiments. The findings from task mining (e.g., XAML process data) may be exported to process documents or to a designer application such as UiPath Studio™ to create and deploy automations more rapidly. Task mining in some embodiments may include taking screenshots with user actions (e.g., mouse click locations, keyboard inputs, application windows and graphical elements the user was interacting with, timestamps for the interactions, etc.), collecting statistical data (e.g., execution time, number of actions, text entries, etc.), editing and annotating screenshots, specifying types of actions to be recorded, etc.

Task capture (e.g., via UiPath Automation Cloud™ and/or UiPath AI Center™) automatically documents attended processes as users work or provides a framework for unattended processes. Such documentation may include desired tasks to automate in the form of process definition documents (PDDs), skeletal workflows, capturing actions for each part of a process, recording user actions and automatically generating a comprehensive workflow diagram including the details about each step, Microsoft Word® documents, XAML files, and the like. Build-ready workflows may be exported directly to a designer application in some embodiments, such as UiPath Studio™. Task capture may simplify the requirements gathering process for both subject matter experts explaining a process and Center of Excellence (CoE) members providing production-grade automations.

Building automations may be accomplished via a designer application (e.g., UiPath Studio™, UiPath StudioX™, or UiPath Studio Web™). For instance, RPA developers of an RPA development facility 150 may use RPA designer applications 154 of computing systems 152 to build and test automations for various applications and environments, such as web, mobile, SAP®, and virtualized desktops. API integration may be provided for various applications, technologies, and platforms. Predefined activities, drag-and-drop modeling, and a workflow recorder, may make automation easier with minimal coding. Document understanding functionality may be provided via Drag-and-drop AI skills for data extraction and interpretation that call one or more AI/ML models 132. Such automations may process virtually any document type and format, including tables, checkboxes, signatures, and handwriting. When data is validated or exceptions are handled, this information may be used to retrain the respective AI/ML models, improving their accuracy over time.

RPA designer application 152 may be designed to call one or more of trained AI/ML models 132 on server 130 and/or generative AI models 172 in a cloud environment via network 120 (e.g., a LAN, a mobile communications network, a satellite communications network, the Internet, any combination thereof, etc.) to assist with the RPA automation development process. In some embodiments, one or more of the AI/ML models may be packaged with RPA designer application 152 or otherwise stored locally on computing system 150.

In some embodiments, RPA designer application 152 and one or more of AI/ML models 132 may be configured to use an object repository stored in database 140. The object repository may include libraries of UI objects that can be used to develop RPA workflows via RPA designer application 152. The object repository may be used to add UI descriptors to activities in the workflows of RPA designer application 152 for UI automations. In some embodiments, one or more of AI/ML models 132 may generate new UI descriptors and add them to the object repository in database 140. Once automations are completed in designer application 152, they may be published on server 130, pushed out to computing systems 102, 104, 106, etc.

An integration service may allow developers to seamlessly combine UI automation with API automation, for example. Automations may be built that require APIs or traverse both API and non-API applications and systems. A repository (e.g., UiPath Object Repository™) or marketplace (e.g., UiPath Marketplace™) for pre-built RPA and AI templates and solutions may be provided to allow developers to automate a wide variety of processes more quickly. Thus, when building automations, hyper-automation system 100 may provide user interfaces, development environments, API integration, pre-built and/or custom-built AI/ML models, development templates, integrated development environments (IDEs), and advanced AI capabilities. Hyper-automation system 100 enables development, deployment, management, configuration, monitoring, debugging, and maintenance of RPA robots in some embodiments, which may provide automations for hyper-automation system 100.

In some embodiments, components of hyper-automation system 100, such as designer application(s) and/or an external rules engine, provide support for managing and enforcing governance policies for controlling various functionality provided by hyper-automation system 100. Governance is the ability for organizations to put policies in place to prevent users from developing automations (e.g., RPA robots) capable of taking actions that may harm the organization, such as violating the E.U. General Data Protection Regulation (GDPR), the U.S. Health Insurance Portability and Accountability Act (HIPAA), third party application terms of service, etc. Since developers may otherwise create automations that violate privacy laws, terms of service, etc. while performing their automations, some embodiments implement access control and governance restrictions at the robot and/or robot design application level. This may provide an added level of security and compliance into to the automation process development pipeline in some embodiments by preventing developers from taking dependencies on unapproved software libraries that may either introduce security risks or work in a way that violates policies, regulations, privacy laws, and/or privacy policies. See, for example, U.S. Patent No. 11,733,668, which is hereby incorporated by reference in its entirety.

The management functionality may provide management, deployment, and optimization of automations across an organization. The management functionality may include orchestration, test management, AI functionality, and/or insights in some embodiments. Management functionality of hyper-automation system 100 may also act as an integration point with third-party solutions and applications for automation applications and/or RPA robots. The management capabilities of hyper-automation system 100 may include, but are not limited to, facilitating provisioning, deployment, configuration, queuing, monitoring, logging, and interconnectivity of RPA robots, among other things.

A conductor application, such as UiPath Orchestrator™ (which may be provided as part of the UiPath Automation Cloud™ in some embodiments, or on premises, in VMs, in a private or public cloud, in a Linux™ VM, or as a cloud native single container suite via UiPath Automation Suite™), provides orchestration capabilities to deploy, monitor, optimize, scale, and ensure security of RPA robot deployments. A test suite (e.g., UiPath Test Suite™) may provide test management to monitor the quality of deployed automations. The test suite may facilitate test planning and execution, meeting of requirements, and defect traceability. The test suite may include comprehensive test reporting.

Analytics software (e.g., UiPath Insights™) may track, measure, and manage the performance of deployed automations. The analytics software may align automation operations with specific key performance indicators (KPIs) and strategic outcomes for an organization. The analytics software may present results in a dashboard format for better understanding by human users.

A data service (e.g., UiPath Data Service™) may be stored in database 140, for example, and bring data into a single, scalable, secure place with a drag-and-drop storage interface. Some embodiments may provide low-code or no-code data modeling and storage to automations while ensuring seamless access, enterprise-grade security, and scalability of the data. AI functionality may be provided by an AI center (e.g., UiPath AI Center™), which facilitates incorporation of AI/ML models into automations. Pre-built AI/ML models, model templates, and various deployment options may make such functionality accessible even to those who are not data scientists. Deployed automations (e.g., RPA robots) may call AI/ML models from the AI center, such as AI/ML models 132. Performance of the AI/ML models may be monitored, and be trained and improved using human-validated data, such as that provided by data review center 160. Human reviewers may provide labeled data to core hyper-automation system 120 via a review application 164 on computing systems 162. For instance, human reviewers may validate that predictions by AI/ML models 132 and/or generative AI models 172 are accurate or provide corrections otherwise. This dynamic input may then be saved as training data for retraining AI/ML models 132 and/or generative AI models 172, and may be stored in a database such as database 140, for example. The AI center may then schedule and execute training jobs to train the new versions of the AI/ML models using the training data. Both positive and negative examples may be stored and used for retraining of AI/ML models 132 and/or generative AI models 172.

The engagement functionality engages humans and automations as one team for seamless collaboration on desired processes. Low-code applications may be built (e.g., via UiPath Apps™) to connect browser tabs and legacy software, even that lacking APIs in some embodiments. Applications may be created quickly using a web browser through a rich library of drag-and-drop controls, for instance. An application can be connected to a single automation or multiple automations.

An action center (e.g., UiPath Action Center™) provides a straightforward and efficient mechanism to hand off processes from automations to humans, and vice versa. Humans may provide approvals or escalations, make exceptions, etc. The automation may then perform the automatic functionality of a given workflow.

A local assistant may be provided as a launchpad for users to launch automations (e.g., UiPath Assistant™). This functionality may be provided in a tray provided by an operating system, for example, and may allow users to interact with RPA robots and RPA robot-powered applications on their computing systems. An interface may list automations approved for a given user and allow the user to run them. These may include ready-to-go automations from an automation marketplace, an internal automation store in an automation hub, etc. When automations run, they may run as a local instance in parallel with other processes on the computing system so users can use the computing system while the automation performs its actions. In certain embodiments, the assistant is integrated with the task capture functionality such that users can document their soon-to-be-automated processes from the assistant launchpad.

Chatbots (e.g., UiPath Chatbots™), social messaging applications, an/or voice commands may enable users to run automations. This may simplify access to information, tools, and resources users need in order to interact with customers or perform other activities. Conversations between people may be readily automated, as with other processes. Trigger RPA robots kicked off in this manner may perform operations such as checking an order status, posting data in a CRM, etc., potentially using plain language commands.

End-to-end measurement and government of an automation program at any scale may be provided by hyper-automation system 100 in some embodiments. Per the above, analytics may be employed to understand the performance of automations (e.g., via UiPath Insights™). Data modeling and analytics using any combination of available business metrics and operational insights may be used for various automated processes. Custom-designed and pre-built dashboards allow data to be visualized across desired metrics, new analytical insights to be discovered, performance indicators to be tracked, ROI to be discovered for automations, telemetry monitoring to be performed on user computing systems, errors and anomalies to be detected, and automations to be debugged. An automation management console (e.g., UiPath Automation Ops™) may be provided to manage automations throughout the automation lifecycle. An organization may govern how automations are built, what users can do with them, and which automations users can access.

Hyper-automation system 100 provides an iterative platform in some embodiments. Processes can be discovered, automations can be built, tested, and deployed, performance may be measured, use of the automations may readily be provided to users, feedback may be obtained, AI/ML models may be trained and retrained, and the process may repeat itself. This facilitates a more robust and effective suite of automations.

In some embodiments, generative AI models are used. Generative AI can generate various types of content, such as text, imagery, audio, and synthetic data. Various types of generative AI models may be used, including, but not limited to, large language models (LLMs), generative adversarial networks (GANs), variational autoencoders (VAEs), transformers, etc. These models may be part of AI/ML models 132 hosted on server 130. For instance, the generative AI models may be trained on a large corpus of textual information to perform semantic understanding, to understand the nature of what is present on a screen from text, to automatically generate code, and the like. In certain embodiments, generative AI models 172 provided by an existing cloud ML service provider, such as OpenAI®, Google®, Amazon®, Microsoft®, IBM®, Nvidia®, Meta®, etc., may be employed and trained to provide such functionality. In generative AI embodiments where generative AI model(s) 172 are remotely hosted, server 130 can be configured to integrate with third-party APIs, which allow server 130 to send a request to generative AI model(s) 172 including the requisite input information and receive a response in return (e.g., the semantic matches of fields between application versions, a classification of the type of the application on the screen, etc.). Such embodiments may provide a more advanced and sophisticated user experience, as well as provide access to state-of-the-art natural language processing (NLP) and other ML capabilities that these companies offer.

One aspect of generative AI models in some embodiments is the use of transfer learning. In transfer learning, a pretrained generative AI mode, such as an LLM, is fine-tuned on a specific task or domain. This allows the LLM to leverage the knowledge already learned during its initial training and adapt it to a specific application. In the case of LLMs, the pretraining phase involves training an LLM on a large corpus of text, typically consisting of billions of words. During this phase, the LLM learns the semantic relationships between words and phrases, which enables the LLM to generate coherent and human-like responses to text-based inputs. The output of this pretraining phase is an LLM that has a high level of understanding of the underlying patterns in natural language.

In the fine-tuning phase, the pretrained LLM is adapted to a specific task or domain by training the LLM on a smaller dataset that is specific to the task. For instance, in some embodiments, the LLM may be trained to analyze a certain type or multiple types of data sources to improve its accuracy with respect to their content. Such information may be provided as part of the training data, and the LLM may learn to focus on these areas and more accurately identify data elements therein. Fine-tuning allows the LLM to learn the nuances of the task or domain, such as the specific vocabulary and syntax used in that domain, without requiring as much data as would be necessary to train an LLM from scratch. By leveraging the knowledge learned in the pretraining phase, the fine-tuned LLM can achieve state-of-the-art performance on specific tasks with a relatively small amount of training data.

LLMs may be trained using a corpus. Vector databases index, store, and provide access to structured or unstructured data (e.g., text, images, time series data, etc.) alongside the vector embeddings thereof. Data such as text may be tokenized, where single letters, words, or sequences of words are parsed from the text into tokens. Token-to-embedding mappings are typically learned as part of an end-to-end model, which are the numerical representations of this data. Vector databases allow users to find and retrieve similar objects quickly and at scale in production environments.

AI and ML allow unstructured data to be numerically represented without losing the semantic meaning thereof in vector embeddings. A vector embedding is a long list of numbers, each describing a feature of the data object that the vector embedding represents. Multiple coordinates together code for features that are meaningful to humans, somewhat analogous to how genes are made up of multiple base pairs. Similar objects are grouped together in the vector space. In other words, the more similar the objects are, the closer that the vector embeddings representing the objects will be to one another. Similar objects may be found using a vector search, similarity search, or semantic search. The distance between the vector embeddings may be calculated using various techniques including, but not limited to, squared Euclidean or L2-squared distance, Manhattan or L1 distance, cosine similarity, dot product, Hamming distance, etc. It may be beneficial to select the same metric that is used to train the AI/ML model.

Vector indexing may be used to organize vector embeddings so data can be retrieved efficiently. Calculating the distance between a vector embedding and all other vector embeddings in the vector database using the k-Nearest Neighbors (kNN) algorithm can be computationally expensive if there are a large number of data points since the required calculations increase linearly ($O(n)$) with the dimensionality and the number of data points. It is more efficient to find similar objects using an approximate nearest neighbor (ANN) approach. The distances between the vector embeddings are precalculated, and similar vectors are organized and stored close to one another (e.g., in clusters or a graph) similar objects can be found faster. This process is called "vector indexing." ANN algorithms that may be used in some embodiments include, but are not limited to, clustering-based indexing, proximity graph-based indexing, tree-based indexing, hash-based indexing, compression-based indexing, etc.

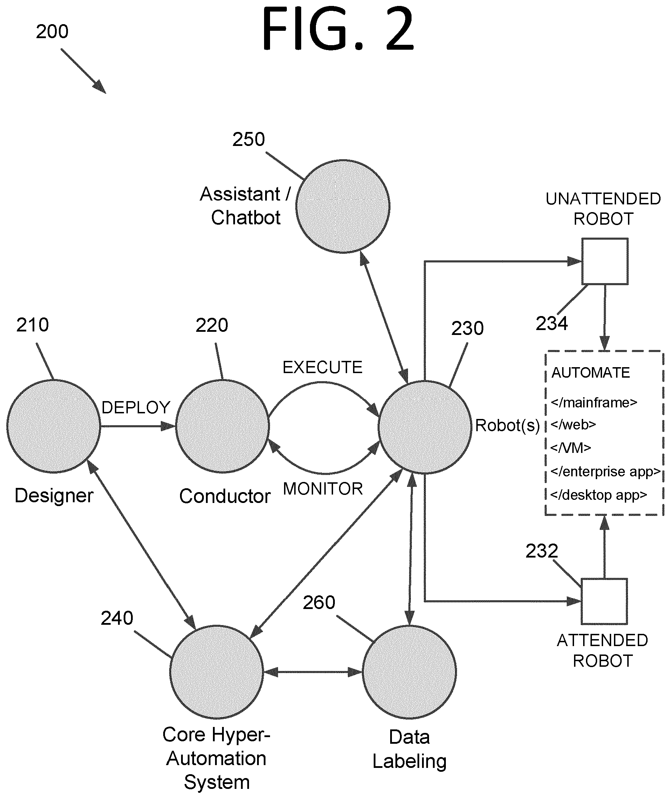

FIG. 2 is an architectural diagram illustrating an RPA system 200, according to an embodiment of the present invention. In some embodiments, RPA system 200 is part of hyper-automation system 100 of FIG. 1. RPA system 200 includes a designer 210 that allows a developer to design and implement workflows. Designer 210 may provide a solution for application integration, as well as automating third-party applications, administrative Information Technology (IT) tasks, and business IT processes. Designer 210 may facilitate development of an automation project, which is a graphical representation of a business process. Simply put, designer 210 facilitates the development and deployment of workflows and robots. In some embodiments, designer 210 may be an application that runs on a user's desktop, an application that runs remotely in a VM, a web application, etc.

The automation project enables automation of rule-based processes by giving the developer control of the execution order and the relationship between a custom set of steps developed in a workflow, defined herein as "activities" per the above. One commercial example of an embodiment of designer 210 is UiPath Studio™. Each activity may include an action, such as clicking a button, reading a file, writing to a log panel, etc. In some embodiments, workflows may be nested or embedded.

Some types of workflows may include, but are not limited to, sequences, flowcharts, Finite State Machines (FSMs), and/or global exception handlers. Sequences may be particularly suitable for linear processes, enabling flow from one activity to another without cluttering a workflow. Flowcharts may be particularly suitable to more complex business logic, enabling integration of decisions and connection of activities in a more diverse manner through multiple branching logic operators. FSMs may be particularly suitable for large workflows. FSMs may use a finite number of states in their execution, which are triggered by a condition (i.e., transition) or an activity. Global exception handlers may be particularly suitable for determining workflow behavior when encountering an execution error and for debugging processes.

Once a workflow is developed in designer 210, execution of business processes is orchestrated by conductor 220, which orchestrates one or more robots 230 that execute the workflows developed in designer 210. One commercial example of an embodiment of conductor 220 is UiPath Orchestrator™. Conductor 220 facilitates management of the creation, monitoring, and deployment of resources in an environment. Conductor 220 may act as an integration point with third-party solutions and applications. Per the above, in some embodiments, conductor 220 may be part of core hyper-automation system 120 of FIG. 1.

Conductor 220 may manage a fleet of robots 230, connecting and executing robots 230 from a centralized point. Types of robots 230 that may be managed include, but are not limited to, attended robots 232, unattended robots 234, development robots (similar to unattended robots 234, but used for development and testing purposes), and nonproduction robots (similar to attended robots 232, but used for development and testing purposes). Attended robots 232 are triggered by user events and operate alongside a human on the same computing system. Attended robots 232 may be used with conductor 220 for a centralized process deployment and logging medium. Attended robots 232 may help the human user accomplish various tasks, and may be triggered by user events. In some embodiments, processes cannot be started from conductor 220 on this type of robot and/or they cannot run under a locked screen. In certain embodiments, attended robots 232 can only be started from a robot tray or from a command prompt. Attended robots 232 should run under human supervision in some embodiments.

Unattended robots 234 run unattended in virtual environments and can automate many processes. Unattended robots 234 may be responsible for remote execution, monitoring, scheduling, and providing support for work queues. Debugging for all robot types may be run in designer 210 in some embodiments. Both attended and unattended robots may automate various systems and applications including, but not limited to, mainframes, web applications, VMs, enterprise applications (e.g., those produced by SAP®, SalesForce®, Oracle®, etc.), and computing system applications (e.g., desktop and laptop applications, mobile device applications, wearable computer applications, etc.).

Conductor 220 may have various capabilities including, but not limited to, provisioning, deployment, configuration, queueing, monitoring, logging, and/or providing interconnectivity. Provisioning may include creating and maintenance of connections between robots 230 and conductor 220 (e.g., a web application). Deployment may include assuring the correct delivery of package versions to assigned robots 230 for execution. Configuration may include maintenance and delivery of robot environments and process configurations. Queueing may include providing management of queues and queue items. Monitoring may include keeping track of robot identification data and maintaining user permissions. Logging may include storing and indexing logs to a database (e.g., a structured query language (SQL) database or a "not only" SQL (NoSQL) database) and/or another storage mechanism (e.g., ElasticSearch®, which provides the ability to store and quickly query large datasets). Conductor 220 may provide interconnectivity by acting as the centralized point of communication for third-party solutions and/or applications.

Robots 230 are execution agents that implement workflows built in designer 210. One commercial example of some embodiments of robot(s) 230 is UiPath Robots™. In some embodiments, robots 230 install the Microsoft Windows® Service Control Manager (SCM)-managed service by default. As a result, such robots 230 can open interactive Windows® sessions under the local system account, and have the rights of a Windows® service.

In some embodiments, robots 230 can be installed in a user mode. For such robots 230, this means they have the same rights as the user under which a given robot 230 has been installed. This feature may also be available for High Density (HD) robots, which ensure full utilization of each machine at its maximum potential. In some embodiments, any type of robot 230 may be configured in an HD environment.

Robots 230 in some embodiments are split into several components, each being dedicated to a particular automation task. The robot components in some embodiments include, but are not limited to, SCM-managed robot services, user mode robot services, executors, agents, and command line. SCM-managed robot services manage and monitor Windows® sessions and act as a proxy between conductor 220 and the execution hosts (i.e., the computing systems on which robots 230 are executed). These services are trusted with and manage the credentials for robots 230. A console application is launched by the SCM under the local system.

User mode robot services in some embodiments manage and monitor Windows® sessions and act as a proxy between conductor 220 and the execution hosts. User mode robot services may be trusted with and manage the credentials for robots 230. A Windows® application may automatically be launched if the SCM-managed robot service is not installed.

Executors may run given jobs under a Windows® session (i.e., they may execute workflows. Executors may be aware of per-monitor dots per inch (DPI) settings. Agents may be Windows® Presentation Foundation (WPF) applications that display the available jobs in the system tray window. Agents may be a client of the service. Agents may request to start or stop jobs and change settings. The command line is a client of the service. The command line is a console application that can request to start jobs and waits for their output.

Having components of robots 230 split as explained above helps developers, support users, and computing systems more easily run, identify, and track what each component is executing. Special behaviors may be configured per component this way, such as setting up different firewall rules for the executor and the service. The executor may always be aware of DPI settings per monitor in some embodiments. As a result, workflows may be executed at any DPI, regardless of the configuration of the computing system on which they were created. Projects from designer 210 may also be independent of browser zoom level in some embodiments. For applications that are DPI-unaware or intentionally marked as unaware, DPI may be disabled in some embodiments.

RPA system 200 in this embodiment is part of a hyper-automation system. Developers may use designer 210 to build and test RPA robots that utilize AI/ML models deployed in core hyper-automation system 240 (e.g., as part of an AI center thereof). Such RPA robots may send input for execution of the AI/ML model(s) and receive output therefrom via core hyper-automation system 240.

One or more of robots 230 may be listeners, as described above. These listeners may provide information to core hyper-automation system 240 regarding what users are doing when they use their computing systems. This information may then be used by core hyper-automation system for process mining, task mining, task capture, etc.

An assistant / chatbot 250 may be provided on user computing systems to allow users to launch RPA local robots. The assistant may be located in a system tray, for example. Chatbots may have a user interface so users can see text in the chatbot. Alternatively, chatbots may lack a user interface and run in the background, listening using the computing system's microphone for user speech.

In some embodiments, data labeling may be performed by a user of the computing system on which a robot is executing or on another computing system that the robot provides information to. For instance, if a robot calls an AI/ML model that performs CV on images for VM users, but the AI/ML model does not correctly identify a button on the screen, the user may draw a rectangle around the misidentified or non-identified component and potentially provide text with a correct identification. This information may be provided to core hyper-automation system 240 and then used later for training a new version of the AI/ML model.

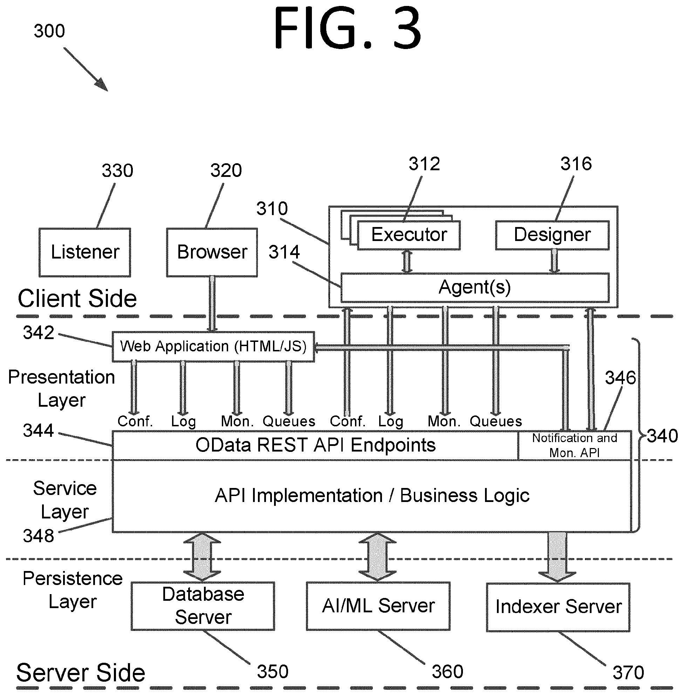

FIG. 3 is an architectural diagram illustrating a deployed RPA system 300, according to an embodiment of the present invention. In some embodiments, RPA system 300 may be a part of RPA system 200 of FIG. 2 and/or hyper-automation system 100 of FIG. 1. Deployed RPA system 300 may be a cloud-based system, an on-premises system, a desktop-based system that offers enterprise level, user level, or device level automation solutions for automation of different computing processes, etc.

It should be noted that the client side, the server side, or both, may include any desired number of computing systems without deviating from the scope of the invention. On the client side, a robot application 310 includes executors 312, an agent 314, and a designer 316. However, in some embodiments, designer 316 may not be running on the same computing system as executors 312 and agent 314. Executors 312 are running processes. Several business projects may run simultaneously, as shown in FIG. 3. Agent 314 (e.g., a Windows® service) is the single point of contact for all executors 312 in this embodiment. All messages in this embodiment are logged into conductor 340, which processes them further via database server 350, an AI/ML server 360, an indexer server 370, or any combination thereof. As discussed above with respect to FIG. 2, executors 312 may be robot components.

In some embodiments, a robot represents an association between a machine name and a username. The robot may manage multiple executors at the same time. On computing systems that support multiple interactive sessions running simultaneously (e.g., Windows® Server 2012), multiple robots may be running at the same time, each in a separate Windows® session using a unique username. This is referred to as HD robots above.

Agent 314 is also responsible for sending the status of the robot (e.g., periodically sending a "heartbeat" message indicating that the robot is still functioning) and downloading the required version of the package to be executed. The communication between agent 314 and conductor 340 is always initiated by agent 314 in some embodiments. In the notification scenario, agent 314 may open a WebSocket channel that is later used by conductor 340 to send commands to the robot (e.g., start, stop, etc.).

A listener 330 monitors and records data pertaining to user interactions with an attended computing system and/or operations of an unattended computing system on which listener 330 resides. Listener 330 may be an RPA robot, part of an operating system, a downloadable application for the respective computing system, or any other software and/or hardware without deviating from the scope of the invention. Indeed, in some embodiments, the logic of the listener is implemented partially or completely via physical hardware.

On the server side, a presentation layer (web application 342, Open Data Protocol (OData) Representative State Transfer (REST) Application Programming Interface (API) endpoints 344, and notification and monitoring 346), a service layer (API implementation / business logic 348), and a persistence layer (database server 350, AI/ML server 360, and indexer server 370) are included. Conductor 340 includes web application 342, OData REST API endpoints 344, notification and monitoring 346, and API implementation / business logic 348. In some embodiments, most actions that a user performs in the interface of conductor 340 (e.g., via browser 320) are performed by calling various APIs. Such actions may include, but are not limited to, starting jobs on robots, adding/removing data in queues, scheduling jobs to run unattended, etc. without deviating from the scope of the invention. Web application 342 is the visual layer of the server platform. In this embodiment, web application 342 uses Hypertext Markup Language (HTML) and JavaScript (JS). However, any desired markup languages, script languages, or any other formats may be used without deviating from the scope of the invention. The user interacts with web pages from web application 342 via browser 320 in this embodiment in order to perform various actions to control conductor 340. For instance, the user may create robot groups, assign packages to the robots, analyze logs per robot and/or per process, start and stop robots, etc.

In addition to web application 342, conductor 340 also includes service layer that exposes OData REST API endpoints 344. However, other endpoints may be included without deviating from the scope of the invention. The REST API is consumed by both web application 342 and agent 314. Agent 314 is the supervisor of one or more robots on the client computer in this embodiment.

The REST API in this embodiment covers configuration, logging, monitoring, and queueing functionality. The configuration endpoints may be used to define and configure application users, permissions, robots, assets, releases, and environments in some embodiments. Logging REST endpoints may be used to log different information, such as errors, explicit messages sent by the robots, and other environment-specific information, for instance. Deployment REST endpoints may be used by the robots to query the package version that should be executed if the start job command is used in conductor 340. Queueing REST endpoints may be responsible for queues and queue item management, such as adding data to a queue, obtaining a transaction from the queue, setting the status of a transaction, etc.

Monitoring REST endpoints may monitor web application 342 and agent 314. Notification and monitoring API 346 may be REST endpoints that are used for registering agent 314, delivering configuration settings to agent 314, and for sending/receiving notifications from the server and agent 314. Notification and monitoring API 346 may also use WebSocket communication in some embodiments.

The APIs in the service layer may be accessed through configuration of an appropriate API access path in some embodiments, e.g., based on whether conductor 340 and an overall hyper-automation system have an on-premises deployment type or a cloud-based deployment type. APIs for conductor 340 may provide custom methods for querying stats about various entities registered in conductor 340. Each logical resource may be an OData entity in some embodiments. In such an entity, components such as the robot, process, queue, etc., may have properties, relationships, and operations. APIs of conductor 340 may be consumed by web application 342 and/or agents 314 in two ways in some embodiments: by getting the API access information from conductor 340, or by registering an external application to use the OAuth flow.

The persistence layer includes a trio of servers in this embodiment - database server 350 (e.g., a SQL server), AI/ML server 360 (e.g., a server providing AI/ML model serving services, such as AI center functionality) and indexer server 370. Database server 350 in this embodiment stores the configurations of the robots, robot groups, associated processes, users, roles, schedules, etc. This information is managed through web application 342 in some embodiments. Database server 350 may manage queues and queue items. In some embodiments, database server 350 may store messages logged by the robots (in addition to or in lieu of indexer server 370). Database server 350 may also store process mining, task mining, and/or task capture-related data, received from listener 330 installed on the client side, for example. While no arrow is shown between listener 330 and database 350, it should be understood that listener 330 is able to communicate with database 350, and vice versa in some embodiments. This data may be stored in the form of PDDs, images, XAML files, etc. Listener 330 may be configured to intercept user actions, processes, tasks, and performance metrics on the respective computing system on which listener 330 resides. For example, listener 330 may record user actions (e.g., clicks, typed characters, locations, applications, active elements, times, etc.) on its respective computing system and then convert these into a suitable format to be provided to and stored in database server 350.

AI/ML server 360 facilitates incorporation of AI/ML models into automations. Pre-built AI/ML models, model templates, and various deployment options may make such functionality accessible even to those who are not data scientists. Deployed automations (e.g., RPA robots) may call AI/ML models from AI/ML server 360. Performance of the AI/ML models may be monitored, and be trained and improved using human-validated data. AI/ML server 360 may schedule and execute training jobs to train new versions of the AI/ML models.

AI/ML server 360 may store data pertaining to AI/ML models and ML packages for configuring various ML skills for a user at development time. An ML skill, as used herein, is a pre-built and trained ML model for a process, which may be used by an automation, for example. AI/ML server 360 may also store data pertaining to document understanding technologies and frameworks, algorithms and software packages for various AI/ML capabilities including, but not limited to, intent analysis, NLP, speech analysis, different types of AI/ML models, etc.

Indexer server 370, which is optional in some embodiments, stores and indexes the information logged by the robots. In certain embodiments, indexer server 370 may be disabled through configuration settings. In some embodiments, indexer server 370 uses ElasticSearch®, which is an open source project full-text search engine. Messages logged by robots (e.g., using activities like log message or write line) may be sent through the logging REST endpoint(s) to indexer server 370, where they are indexed for future utilization.

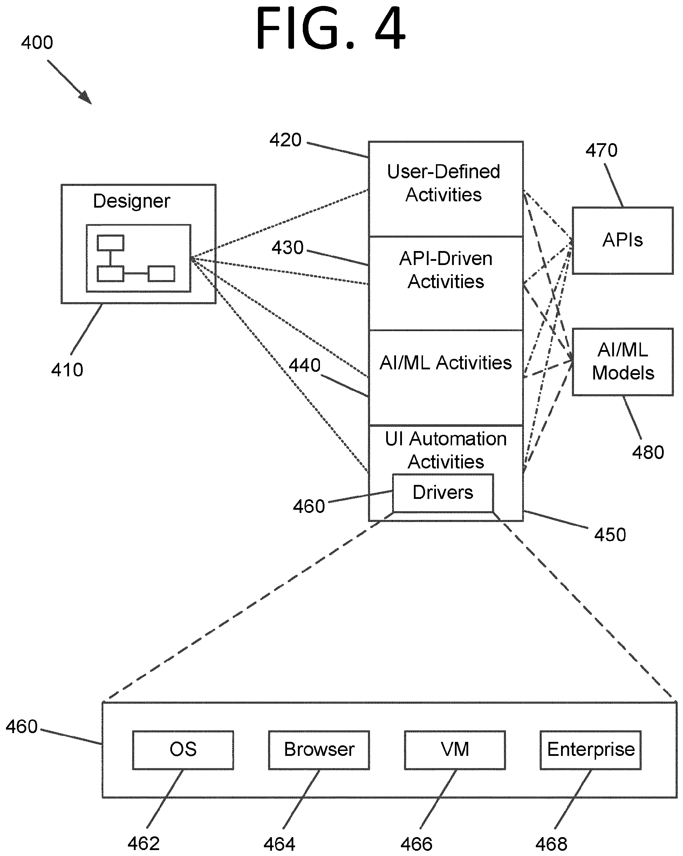

FIG. 4 is an architectural diagram illustrating the relationship 400 between a designer 410, activities 420, 430, 440, 450, drivers 460, APIs 470, and AI/ML models 480, according to an embodiment of the present invention. Per the above, a developer uses designer 410 to develop workflows that are executed by robots. The various types of activities may be displayed to the developer in some embodiments. Designer 410 may be local to the user's computing system or remote thereto (e.g., accessed via VM or a local web browser interacting with a remote web server). Workflows may include user-defined activities 420, API-driven activities 430, AI/ML activities 440, and/or UI automation activities 450. User-defined activities 420 and API-driven activities 440 interact with applications via their APIs. User-defined activities 420 and/or AI/ML activities 440 may call one or more AI/ML models 480 in some embodiments, which may be located locally to the computing system on which the robot is operating and/or remotely thereto.

Some embodiments are able to identify non-textual visual components in an image, which is called CV herein. However, it should be noted that in some embodiments, CV incorporates OCR. CV may be performed at least in part by AI/ML model(s) 480. Some CV activities pertaining to such components may include, but are not limited to, extracting of text from segmented label data using OCR, fuzzy text matching, cropping of segmented label data using ML, comparison of extracted text in label data with ground truth data, etc. In some embodiments, there may be hundreds or even thousands of activities that may be implemented in user-defined activities 420. However, any number and/or type of activities may be used without deviating from the scope of the invention.

UI automation activities 450 are a subset of special, lower-level activities that are written in lower-level code and facilitate interactions with the screen. UI automation activities 450 facilitate these interactions via drivers 460 that allow the robot to interact with the desired software. For instance, drivers 460 may include operating system (OS) drivers 462, browser drivers 464, VM drivers 466, enterprise application drivers 468, etc. One or more of AI/ML models 480 may be used by UI automation activities 450 in order to perform interactions with the computing system in some embodiments. In certain embodiments, AI/ML models 480 may augment drivers 460 or replace them completely. Indeed, in certain embodiments, drivers 460 are not included.

Drivers 460 may interact with the OS at a low level looking for hooks, monitoring for keys, etc. via OS drivers 462. Drivers 460 may facilitate integration with Chrome®, IE®, Citrix®, SAP®, etc. For instance, the "click" activity performs the same role in these different applications via drivers 460.

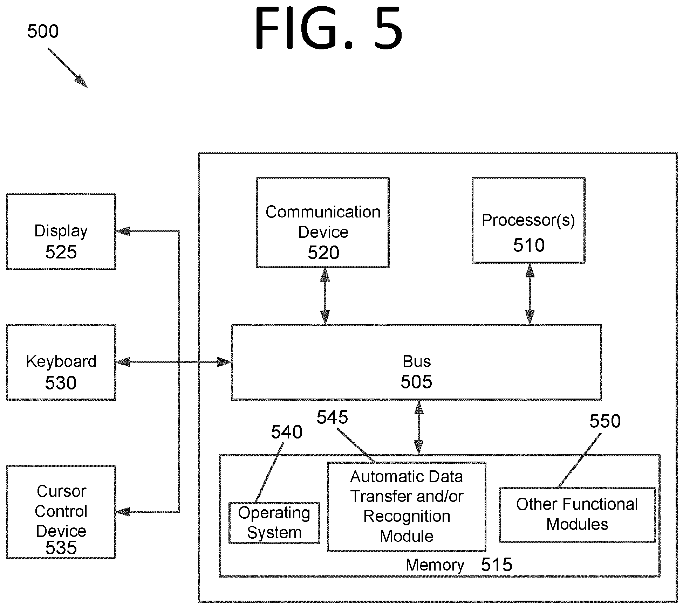

FIG. 5 is an architectural diagram illustrating a computing system 500 configured to perform part of AI-driven, automatic data transfer including semantic associations between a source and a target application, according to an embodiment of the present invention. In some embodiments, computing system 500 may be one or more of the computing systems depicted and/or described herein. In certain embodiments, computing system 500 may be part of a hyper-automation system, such as that shown in FIGS. 1 and 2. Computing system 500 includes a bus 505 or other communication mechanism for communicating information, and processor(s) 510 coupled to bus 505 for processing information. Processor(s) 510 may be any type of general or specific purpose processor, including a Central Processing Unit (CPU), an Application Specific Integrated Circuit (ASIC), a Field Programmable Gate Array (FPGA), a Graphics Processing Unit (GPU), multiple instances thereof, and/or any combination thereof. Processor(s) 510 may also have multiple processing cores, and at least some of the cores may be configured to perform specific functions. Multi-parallel processing may be used in some embodiments. In certain embodiments, at least one of processor(s) 510 may be a neuromorphic circuit that includes processing elements that mimic biological neurons. In some embodiments, neuromorphic circuits may not require the typical components of a Von Neumann computing architecture.

Computing system 500 further includes a memory 515 for storing information and instructions to be executed by processor(s) 510. Memory 515 can be comprised of any combination of random access memory (RAM), read-only memory (ROM), flash memory, cache, static storage such as a magnetic or optical disk, or any other types of non-transitory computer-readable media or combinations thereof. Non-transitory computer-readable media may be any available media that can be accessed by processor(s) 510 and may include volatile media, non-volatile media, or both. The media may also be removable, non-removable, or both. Computing system 500 includes a communication device 520, such as a transceiver, to provide access to a communications network via a wireless and/or wired connection. In some embodiments, communication device 520 may include one or more antennas that are singular, arrayed, phased, switched, beamforming, beamsteering, a combination thereof, and or any other antenna configuration without deviating from the scope of the invention.

Processor(s) 510 are further coupled via bus 505 to a display 525. Any suitable display device and haptic I/O may be used without deviating from the scope of the invention. A keyboard 530 and a cursor control device 535, such as a computer mouse, a touchpad, etc., are further coupled to bus 505 to enable a user to interface with computing system 500. However, in certain embodiments, a physical keyboard and mouse may not be present, and the user may interact with the device solely through display 525 and/or a touchpad (not shown). Any type and combination of input devices may be used as a matter of design choice. In certain embodiments, no physical input device and/or display is present. For instance, the user may interact with computing system 500 remotely via another computing system in communication therewith, or computing system 500 may operate autonomously.

Memory 515 stores software modules that provide functionality when executed by processor(s) 510. The modules include an operating system 540 for computing system 500. The modules further include an automatic data transfer and/or recognition module 545 that is configured to perform all or part of the AI/ML processes described herein or derivatives thereof. Computing system 500 may include one or more additional functional modules 550 that include additional functionality.

One skilled in the art will appreciate that a "system" could be embodied as a server, an embedded computing system, a personal computer, a console, a personal digital assistant (PDA), a cell phone, a tablet computing device, a quantum computing system, or any other suitable computing device, or combination of devices without deviating from the scope of the invention. Presenting the above-described functions as being performed by a "system" is not intended to limit the scope of the present invention in any way, but is intended to provide one example of the many embodiments of the present invention. Indeed, methods, systems, and apparatuses disclosed herein may be implemented in localized and distributed forms consistent with computing technology, including cloud computing systems. The computing system could be part of or otherwise accessible by a local area network (LAN), a mobile communications network, a satellite communications network, the Internet, a public or private cloud, a hybrid cloud, a server farm, any combination thereof, etc. Any localized or distributed architecture may be used without deviating from the scope of the invention.

It should be noted that some of the system features described in this specification have been presented as modules, in order to more particularly emphasize their implementation independence. For example, a module may be implemented as a hardware circuit comprising custom very large scale integration (VLSI) circuits or gate arrays, off-the-shelf semiconductors such as logic chips, transistors, or other discrete components. A module may also be implemented in programmable hardware devices such as field programmable gate arrays, programmable array logic, programmable logic devices, graphics processing units, or the like.

A module may also be at least partially implemented in software for execution by various types of processors. An identified unit of executable code may, for instance, include one or more physical or logical blocks of computer instructions that may, for instance, be organized as an object, procedure, or function. Nevertheless, the executables of an identified module need not be physically located together, but may include disparate instructions stored in different locations that, when joined logically together, comprise the module and achieve the stated purpose for the module. Further, modules may be stored on a computer-readable medium, which may be, for instance, a hard disk drive, flash device, RAM, tape, and/or any other such non-transitory computer-readable medium used to store data without deviating from the scope of the invention.

Indeed, a module of executable code could be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network.

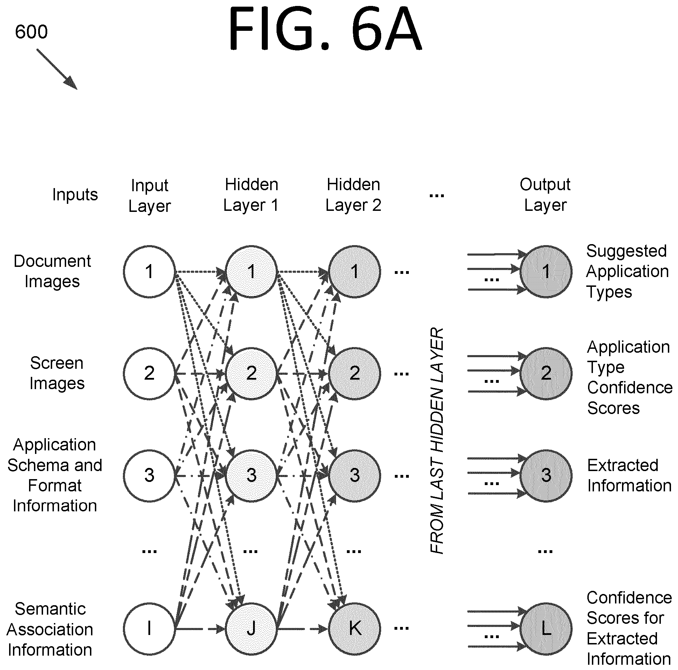

Various types of AI/ML models may be trained and deployed without deviating from the scope of the invention. For instance, FIG. 6A illustrates an example of a neural network 600 that has been trained to supplement operation of a content extraction and application identification system, according to an embodiment of the present invention. Neural network 600 includes a number of hidden layers. Both DLNNs and shallow learning neural networks (SLNNs) usually have multiple layers, although SLNNs may only have one or two layers in some cases, and normally fewer than DLNNs. Typically, the neural network architecture includes an input layer, multiple intermediate layers, and an output layer, as is the case in neural network 600.

A DLNN often has many layers (e.g., 10, 50, 200, etc.) and subsequent layers typically reuse features from previous layers to compute more complex, general functions. A SLNN, on the other hand, tends to have only a few layers and train relatively quickly since expert features are created from raw data samples in advance. However, feature extraction is laborious. DLNNs, on the other hand, usually do not require expert features, but tend to take longer to train and have more layers.

For both approaches, the layers are trained simultaneously on the training set, normally checking for overfitting on an isolated cross-validation set. Both techniques can yield excellent results, and there is considerable enthusiasm for both approaches. The optimal size, shape, and quantity of individual layers varies depending on the problem that is addressed by the respective neural network.

Returning to FIG. 6A, document images, screen images, application schema and format information, semantic association information, etc. are provided as the input layer and fed as inputs to the J neurons of hidden layer 1. While all of these inputs are fed to each neuron in this example, various architectures are possible that may be used individually or in combination including, but not limited to, feed forward networks, radial basis networks, deep feed forward networks, deep convolutional inverse graphics networks, convolutional neural networks, recurrent neural networks, artificial neural networks, long/short term memory networks, gated recurrent unit networks, generative adversarial networks, liquid state machines, auto encoders, variational auto encoders, denoising auto encoders, sparse auto encoders, extreme learning machines, echo state networks, Markov chains, Hopfield networks, Boltzmann machines, restricted Boltzmann machines, deep residual networks, Kohonen networks, deep belief networks, deep convolutional networks, support vector machines, neural Turing machines, or any other suitable type or combination of neural networks without deviating from the scope of the invention.

Hidden layer 2 receives inputs from hidden layer 1, hidden layer 3 receives inputs from hidden layer 2, and so on for all hidden layers until the last hidden layer provides its outputs as inputs for the output layer. In this example, suggested application types, extracted information from documents, and respective confidence scores are output. While multiple suggestions are shown here as output, in some embodiments, only a single output suggestion is provided. In certain embodiments, the suggestions are ranked based on confidence scores.

It should be noted that numbers of neurons I, J, K, and L are not necessarily equal. Thus, any desired number of layers may be used for a given layer of neural network 600 without deviating from the scope of the invention. Indeed, in certain embodiments, the types of neurons in a given layer may not all be the same. In fact, some embodiments may not use neural networks at all.

Neural network 600 is trained to assign confidence score(s)/pseudoprobabilities to appropriate outputs. In order to reduce predictions that are inaccurate, only those results with a confidence score that meets or exceeds a confidence threshold may be provided in some embodiments. For instance, if the confidence threshold is 80%, outputs with confidence scores exceeding this amount may be used and the rest may be ignored.

Neural networks are probabilistic constructs that typically have confidence score(s). This may be a score learned by the AI/ML model based on how often a similar input was correctly identified during training. Some common types of confidence scores include a decimal number between 0 and 1 (which can be interpreted as a confidence percentage as well), a number between negative ∞ and positive ∞, a set of expressions (e.g., "low," "medium," and "high"), etc. Various post-processing calibration techniques may also be employed in an attempt to obtain a more accurate confidence score, such as temperature scaling, batch normalization, weight decay, negative log likelihood (NLL), etc.

"Neurons" in a neural network are implemented algorithmically as mathematical functions that are typically based on the functioning of a biological neuron. Neurons receive weighted input and have a summation and an activation function that governs whether they pass output to the next layer. This activation function may be a nonlinear thresholded activity function where nothing happens if the value is below a threshold, but then the function linearly responds above the threshold (i.e., a rectified linear unit (ReLU) nonlinearity). Summation functions and ReLU functions are used in deep learning since real neurons can have approximately similar activity functions. Via linear transforms, information can be subtracted, added, etc. In essence, neurons act as gating functions that pass output to the next layer as governed by their underlying mathematical function. In some embodiments, different functions may be used for at least some neurons.

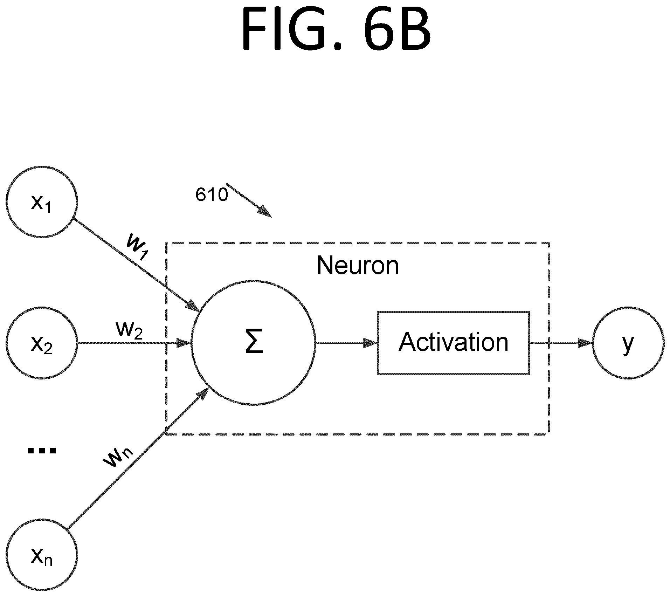

An example of a neuron 610 is shown in FIG. 6B. Inputs $x_1$, $x_2$, ... , $x_n$ from a preceding layer are assigned respective weights $w_1$, $w_2$, ... , $w_n$. Thus, the collective input from preceding neuron 1 is $w_1 x_1$. These weighted inputs are used for the neuron's summation function modified by a bias, such as:

$$\sum_{i=1}^{m} (w_i x_i) + bias \quad (1)$$

This summation is compared against an activation function $f(x)$ to determine whether the neuron "fires". For instance, $f(x)$ may be given by:

$$f(x) = \begin{cases} 1 \text{ if } \sum wx + bias \geq 0 \\ 0 \text{ if } \sum wx + bias < 0 \end{cases} \quad (2)$$

The output y of neuron 610 may thus be given by:

$$y = f(x) \sum_{i=1}^{m} (w_i x_i) + bias \quad (3)$$

In this case, neuron 610 is a single-layer perceptron. However, any suitable neuron type or combination of neuron types may be used without deviating from the scope of the invention. It should also be noted that the ranges of values of the weights and/or the output value(s) of the activation function may differ in some embodiments without deviating from the scope of the invention.

A goal, or "reward/objective/loss function," is often employed. A reward function operationalizes the goal with both short-term and long-term rewards to guide the search of a state space (e.g., finding the most accurate answers to user inquiries based on associated metrics). During training, various labeled data is fed through neural network 600. Successful identifications strengthen weights for inputs to neurons, whereas unsuccessful identifications weaken them. A cost function may be used to punish predictions that are slightly wrong much less than predictions that are very wrong. If the performance of the AI/ML model is not improving after a certain number of training iterations, a data scientist may modify the reward function, provide corrections of incorrect predictions, etc.

Backpropagation is a technique for optimizing synaptic weights in a feedforward neural network. Backpropagation may be used to "pop the hood" on the hidden layers of the neural network to see how much of the loss every node is responsible for, and subsequently updating the weights in such a way that minimizes the loss by giving the nodes with higher error rates lower weights, and vice versa. In other words, backpropagation allows data scientists to efficiently implement gradient descent, and is provably equivalent to naïve approaches.

The backpropagation algorithm is mathematically founded in optimization theory. In supervised learning, training data with a known output is passed through the neural network and error is computed with a cost function from known target output, which gives the error for backpropagation. Error is computed at the output, and this error is transformed into corrections for network weights that will minimize the error.

In the case of supervised learning, an example of backpropagation is provided below. A column vector input $x$ is processed through a series of $N$ nonlinear activation functions $f_i$ between each layer $i = 1, \ldots, N$ of the network, with the output at a given layer first multiplied by a synaptic matrix $W_i$, and with a bias vector $b_i$ added. The network output $o$, given by

$$o = f_N(W_N f_{N-1}(W_{N-1} f_{N-2}(\ldots f_1(W_1 x + b_1) \ldots) + b_{N-1}) + b_N) \quad (4)$$

In some embodiments, o is compared with a target output t, resulting in an error $E = \frac{1}{2}\|o - t\|^2$, which is desired to be minimized.

Optimization in the form of a gradient descent procedure may be used to minimize the error by modifying the synaptic weights $W_i$ for each layer. The gradient descent procedure requires the computation of the output o given an input x corresponding to a known target output $t$, and producing an error $o - t$. This global error is then propagated backwards giving local errors for weight updates with computations similar to, but not exactly the same as, those used for forward propagation. In particular, the backpropagation step typically requires an activation function of the form $p_j(n_j) = f_j'(n_j)$, where $n_j$ is the network activity at layer $j$ (i.e., $n_j = W_j o_{j-1} + b_j$) where $o_j = f_j(n_j)$ and the apostrophe ' denotes the derivative of the activity function f.

The weight updates may be computed via the formulae:

$$d_j = \begin{cases} (o - t) \circ p_j(n_j), & j = N \\ W_{j+1}^{\mathrm{T}} d_{j+1} \circ p_j(n_j), & j < N \end{cases} \quad (5)$$

$$\frac{\partial E}{\partial W_{j+1}} = d_{j+1}(o_j)^{\mathrm{T}} \quad (6)$$

$$\frac{\partial E}{\partial b_{j+1}} = d_{j+1} \quad (7)$$

$$W_j^{\text{new}} = W_j^{\text{old}} - \eta \frac{\partial E}{\partial W_j} \quad (8)$$

$$b_j^{\text{new}} = b_j^{\text{old}} - \eta \frac{\partial E}{\partial b_j} \quad (9)$$

where ∘ denotes a Hadamard product (i.e., the element-wise product of two vectors), $^T$ denotes the matrix transpose, and $o_j$ denotes $f_j(W_j o_{j-1} + b_j)$, with $o_0 = x$. Here, the learning rate $\eta$ is chosen with respect to machine learning considerations. Note that the synapses $W$ and b can be combined into one large synaptic matrix, where it is assumed that the input vector has appended ones, and extra columns representing the b synapses are subsumed to $W$.

The AI/ML model may be trained over multiple epochs until it reaches a good level of accuracy (e.g., 97% or better using an F2 or F4 threshold for detection and approximately 2,000 epochs). This accuracy level may be determined in some embodiments using an F1 score, an F2 score, an F4 score, or any other suitable technique without deviating from the scope of the invention. Once trained on the training data, the AI/ML model may be tested on a set of evaluation data that the AI/ML model has not encountered before. This helps to ensure that the AI/ML model is not "over fit" such that it performs well on the training data, but does not perform well on other data.

In some embodiments, it may not be known what accuracy level is possible for the AI/ML model to achieve. Accordingly, if the accuracy of the AI/ML model is starting to drop when analyzing the evaluation data (i.e., the model is performing well on the training data, but is starting to perform less well on the evaluation data), the AI/ML model may go through more epochs of training on the training data (and/or new training data). In some embodiments, the AI/ML model is only deployed if the accuracy reaches a certain level or if the accuracy of the trained AI/ML model is superior to an existing deployed AI/ML model. In certain embodiments, a collection of trained AI/ML models may be used to accomplish a task. For example, one model may be trained to recognize images, another may recognize text, yet another may recognize semantic and/or ontological associations, etc.

Some embodiments may use transformer networks such as BERT. Such transformer networks learn associations of words and phrases that have both high scores and low scores. This trains the AI/ML model to determine what is close to the input and what is not, respectively. Rather than just using pairs of words/phrases, transformer networks may use the field length and field type, as well.

NLP models such as word2vec, BERT, GPT-3, ChatGPT, other LLMs, etc. may be used in some embodiments to facilitate semantic understanding and provide more accurate and human-like answers, per the above. Other techniques, such as clustering algorithms, may be used to find similarities between groups of elements. Clustering algorithms may include, but are not limited to, density-based algorithms, distribution-based algorithms, centroid-based algorithms, hierarchy-based algorithms. K-means clustering algorithms, the DBSCAN clustering algorithm, the Gaussian mixture model (GMM) algorithms, the balance iterative reducing and clustering using hierarchies (BIRCH) algorithm, etc. Such techniques may also assist with categorization.

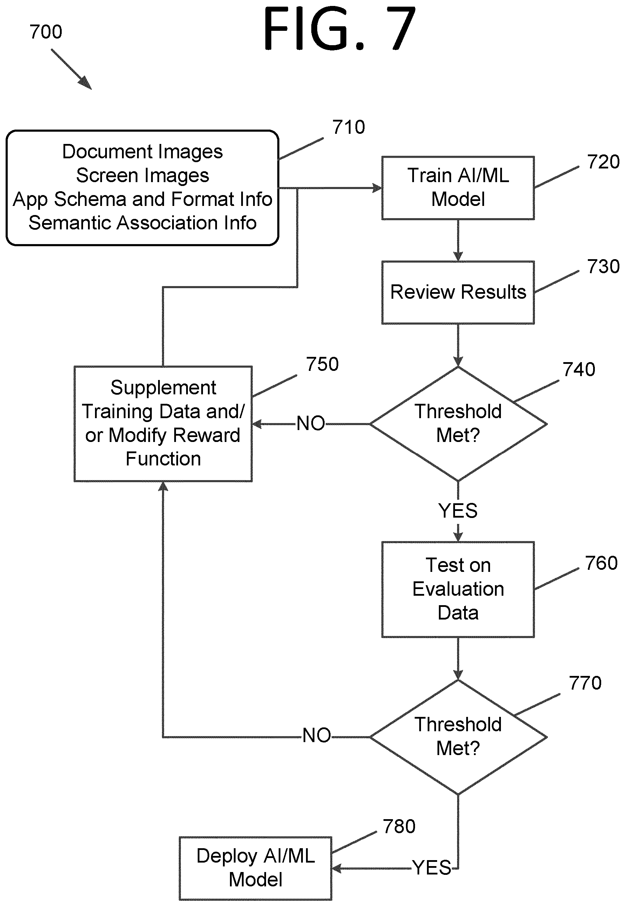

FIG. 7 is a flowchart illustrating a process 700 for training AI/ML model(s), according to an embodiment of the present invention. In some embodiments, the AI/ML model(s) may be generative AI models, per the above. The neural network architecture of AI/ML models typically includes multiple layers of neurons, including input, output, and hidden layers. See FIGS. 6A and 6B, for example. The hidden layers in between process the input data and generate intermediate representations of the input that are used to generate the output. These hidden layers can include various types of neurons, such as convolutional neurons, recurrent neurons, and/or transformer neurons.

The training process begins with providing document images, screen images, application schema and format information, semantic association information, etc., whether labeled or unlabeled, at 710. The AI/ML model is then trained over multiple epochs at 720 and results are reviewed at 730. While various types of AI/ML models may be used, LLMs and other generative AI models are typically trained using a process called "supervised learning", which is also discussed above. Supervised learning involves providing the model with a large dataset, which the model uses to learn the relationships between the inputs and outputs. During the training process, the model adjusts the weights and biases of the neurons in the neural network to minimize the difference between the predicted outputs and the actual outputs in the training dataset.

One aspect of the models in some embodiments is the use of transfer learning. For instance, transfer learning may take advantage of a pretrained model, such as ChatGPT, which is fine-tuned on a specific task or domain in step 720. This allows the model to leverage the knowledge already learned from the pretraining phase and adapt it to a specific application via the training phase of step 720.

The pretraining phase typically involves training the original model on an initial set of training data that may be more general. During this phase, the original model learns relationships in the data. In the fine-tuning phase (e.g., performed during step 720 in addition to or in lieu of the initial training phase in some embodiments if a pretrained original model is used as the initial basis for the final model), the pretrained original model is adapted to a specific task or domain by training the model on a smaller dataset that is specific to the task. For instance, in some embodiments, the final model may be focused on certain types(s) of data sources. This may help the model to more accurately identify data elements therein than a generative AI model that is pretrained alone. Fine-tuning allows the final model to learn the nuances of the source, such as the specific vocabulary and syntax, certain graphical characteristics, certain data formats, etc., without requiring as much data as would be necessary to train the final model from scratch. By leveraging the knowledge learned in the pretraining phase, the fine-tuned, final model can achieve state-of-the-art performance on specific tasks with relatively little additional training data.

If the AI/ML model fails to meet a desired confidence threshold at 740, the training data is supplemented and/or the reward function is modified to help the AI/ML model achieve its objectives better at 750 and the process returns to step 720. If the AI/ML model meets the confidence threshold at 740, the AI/ML model is tested on evaluation data at 760 to ensure that the AI/ML model generalizes well and that the AI/ML model is not over fit with respect to the training data. The evaluation data includes information that the AI/ML model has not processed before. If the confidence threshold is met at 770 for the evaluation data, the AI/ML model is deployed at 780. If not, the process returns to step 750 and the AI/ML model is trained further.

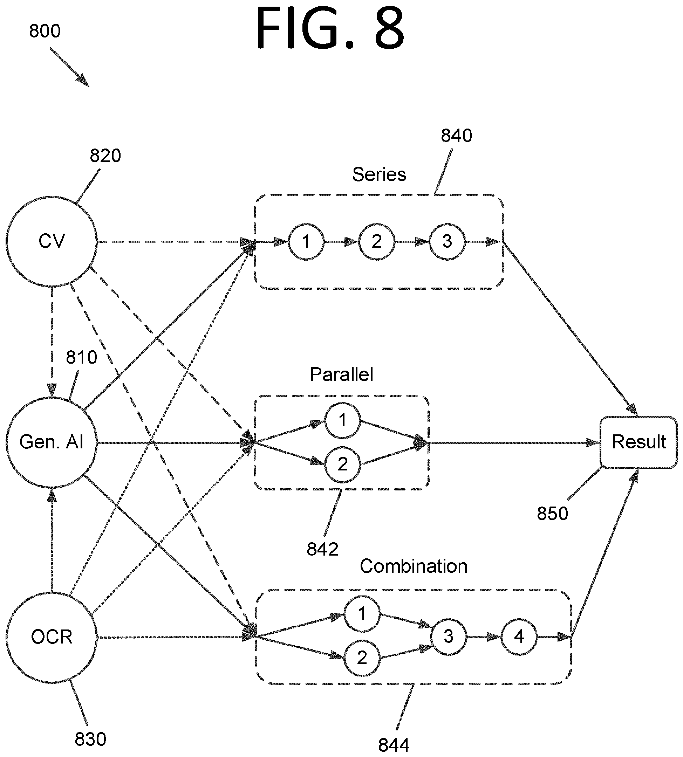

FIG. 8 illustrates AI/ML models 800 of an information extraction system, according to an embodiment of the present invention. AI/ML models 800 may be trained using process 700 of FIG. 7 in some embodiments. A generative AI model 810 provides results to other models in a series configuration 840, a parallel configuration 842, or a combination of series and parallel configuration(s) 844. For instance, the generative AI model may provide sematic associations between text on the screen, determine actions to address issues in RPA workflows or runtime automations, etc. A CV model 820 and an OCR model 830 also provide detected graphical elements and recognized text, respectively, to generative AI model 810 and the models in configuration 840, 842, or 844.

The other models in configuration 840, 842, or 844 use the output from generative AI model 810, CV model 820, and/or OCR model 830 to determine the application that the extracted information pertains to, determine the data format for that application, etc. In this manner, models 800 collectively provide the information that will be sent to an RPA robot on the secondary computing system to input this information into the pertinent application(s). It should be noted, however, that in some embodiments, generative AI model 810 performs some or all operations of the other models.

It should be noted that in some embodiments, a generative AI model with multiple "heads" may be used. Heads refer to output layers of the AI model. Generative AI models, such as generative AI model 172 in FIG. 1, typically have a sequence of layers, and each head will often share the first few layers of the model before diverging into their own distinct layers.

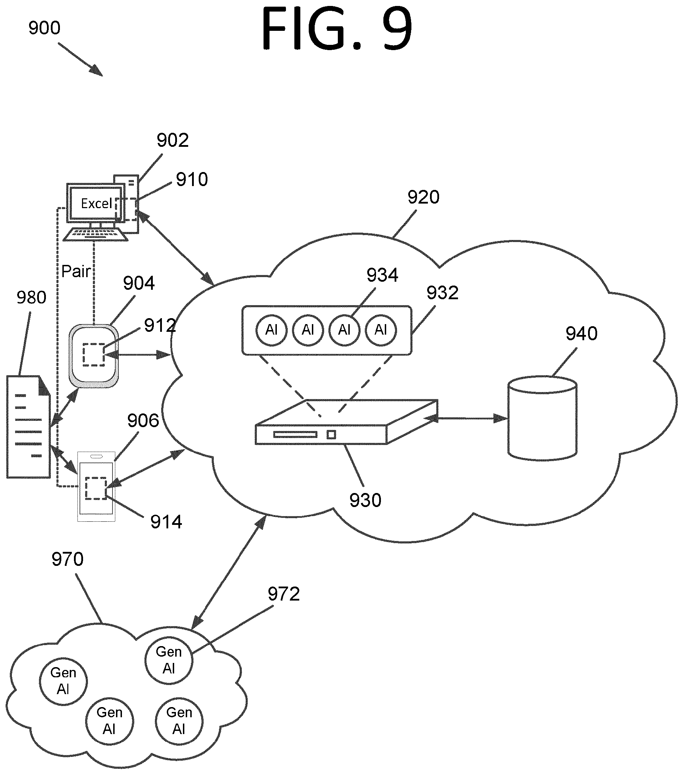

FIG. 9 is a diagram illustrating a system 900 configured to perform AI-driven, automatic data transfer including semantic associations between a physical document source 980 or a screen of another computing system 902 digitally captured by a mobile device 904, 906 and a target application running on computing system 902, according to an embodiment of the present invention. Applications 912, 914 of tablet 904 and smart phone 906, respectively, can be used to take photographs of documents, such as document 980, and screens of computing systems, such as desktop computer 902. In some embodiments, applications 912, 914 also perform CV/OCR on the photograph(s). Applications 912, 914 then send the photograph(s) (and the information obtained from CV/OCR if performed locally on mobile devices 904, 906) to a cloud AI system 920.

A server 930 includes an AI image processing and application identification application 932 that employs AI/ML models 934. AI image processing and application identification application 932 extracts the content from the photograph(s) using CV and OCR models of AI/ML models 934 (if this was not performed locally by mobile device 904, 906) and determines the pertinent application(s) for this content using an application identification model of AI/ML models 934. A semantic understanding model of AI/ML models 934 is then employed to determine how to format the extracted information to semantically copy it to the target application(s). In some embodiments, the application identification model and/or semantic understanding model may be the same or different generative AI models, such as one of generative AI models 972 of cloud generative AI provider system 970.

AI image processing and application identification application 932 determines the identity of the target computing system by looking the target computing system up based on a user account stored in database 940 for the user of the respective mobile device or receives information pertaining to the target computing system, such as an IP address, a MAC address, etc., from the respective mobile device. In this example, the target computing system is desktop computer 902. Mobile devices 904, 906 may pair with desktop computer 902 to determine the identifying information of this computing system in some embodiments.

Using the identifying information for desktop computer 902, AI image processing and application identification application 932 sends the semantically matched information, along with an indication of the application(s) (e.g., Microsoft Excel®, a web browser, Microsoft Word®, Salesforce®, etc. to which the semantically matched information pertains, to a clipboard application 910 (e.g., an RPA robot or another clipboard application). Clipboard application 910 then copies the information into the pertinent forms/fields in screen(s) of the respective target application(s) on desktop computer 902. If the target application(s) are not open or not present on desktop computer 910, clipboard application 910 may open the pertinent application (s) and navigate to the appropriate window(s) or download the target application(s), install them, and configure them. Once the information is copied, a user can then peruse the information and make any desired corrections, which may be transmitted back to cloud AI system to retrain one or more of AI/ML models 934 and/or generative AI models 972.

In some embodiments, AI image processing and application identification application 932 sends the semantically matched information back to mobile device 904, 906 instead of to desktop computer 902. In such embodiments, application 912, 914 causes mobile device 904, 906 to pair with desktop computer 902. Application 912, 914 then causes mobile device 904, 906 to transmit this information to desktop computer 902 using a short-range wireless communication protocol. Clipboard application 910 then uses this information to enter the information into the target application(s) as discussed above.

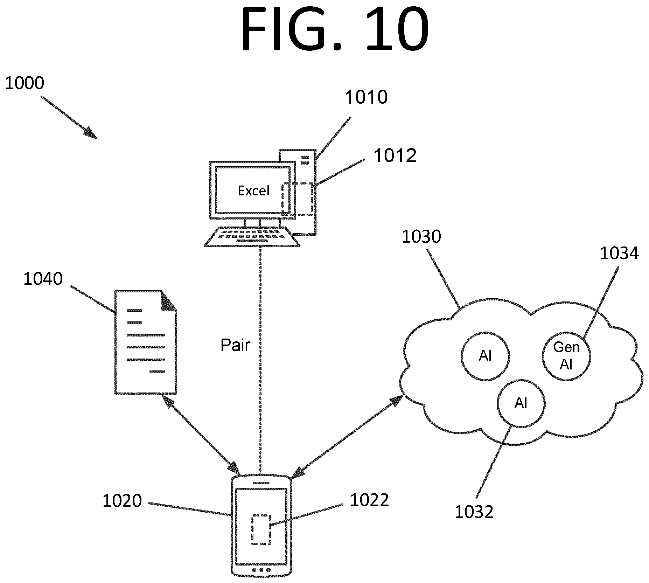

FIG. 10 is a diagram illustrating a system 1000 that is configured to perform AI-driven, automatic data transfer including semantic associations between a physical document source 1040 or a screen of another computing system 1010 digitally captured by a mobile device 1020 and a target application running on other computing system 1010, according to an embodiment of the present invention. In this embodiment, mobile device 1020 stores AI/ML models and/or generative AI models locally or accesses them via a cloud AI system 1030, which includes AI/ML models 1032 and one or more generative AI models 1034. Application 1022 of mobile device 1020 provides the functionality of both application 912, 914 and AI image processing and application identification application 932 in this embodiment. In other words, application, 1022 captures photographs of document 1040 and/or a screen of computing system 1010, extracts the contents thereof, determines the target application(s), and performs semantic matching. Application 1022 then sends an indication of the target application(s) and the semantically matched information to computing system 1010. Clipboard application 1012 then copies this information into the appropriate forms/fields of the target application(s).

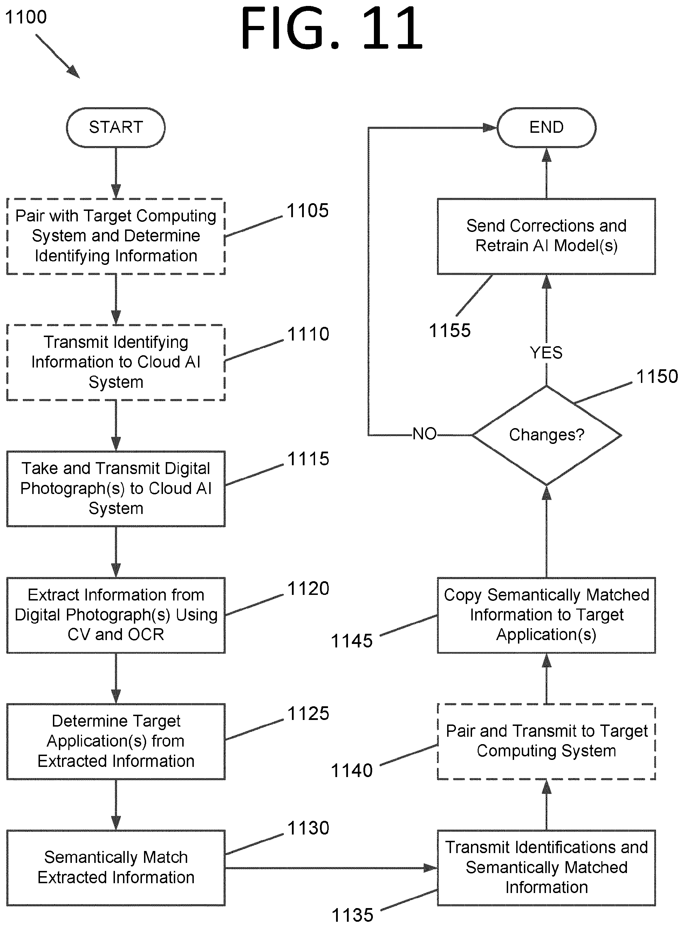

FIG. 11 is a flowchart illustrating a process 1100 for performing AI-driven, automatic data transfer between a mobile device and a target computing system, according to an embodiment of the present invention. The process optionally begins with a mobile device pairing with a target computing system and determining identifying information for the target computing system at 1105, and transmitting the identifying information to a cloud AI system at 1110. In some embodiments, the identifying information includes an IP address of the target computing system, a MAC address of the target computing system, or both.

One or more digital photographs including one or more documents, one or more screens of an application from the target computing system, or both, are taken and transmitted to the cloud AI system at 1115. The cloud AI system extracts information from the digital photograph(s) using CV and OCR at 1120. The AI cloud system then determines one or more target applications that the extracted information pertains to using a categorization AI model at 1125 and semantically matches the extracted information to respective fields in the one or more target applications using one or more semantic matching AI models at 1130. In some embodiments, at least two of the one or more AI models configured to perform CV and OCR, the categorization AI model, and the semantic matching AI model are heads of the same generative AI model. In certain embodiments, AI model(s) configured to perform CV and OCR, the categorization AI model, and the semantic matching AI model are executed in series such that the categorization AI model receives output from the AI model(s) configured to perform CV and OCR and the semantic matching AI model receives output from both the categorization AI model and the AI model(s) configured to perform CV and OCR.

After this information has been determined, the cloud AI system transmits one or more identifications of the one or more target applications and the semantically matched information to the mobile device or the target computing system at 1135. If this information was transmitted to the mobile device, the mobile device pairs with the target computing system and transmits the one or more identifications of the one or more target applications and the semantically matched information to the target computing system at 1140. The semantically matched information is then copied to the target application(s) at 1145. If the user made corrections to the copied information at 1150, the corrections are sent to the cloud AI system at 1155 for retraining the AI model(s) that perform CV and OCR, the categorization AI model, and/or the semantic matching AI model.

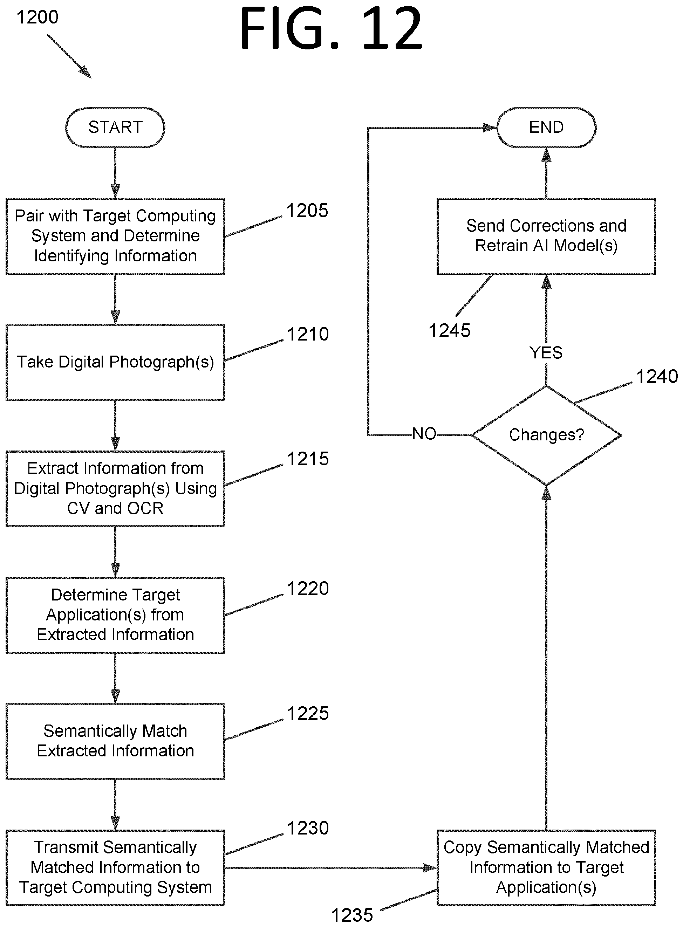

FIG. 12 is a flowchart illustrating another process 1200 for performing AI-driven, automatic data transfer between a mobile device and a target computing system, according to an embodiment of the present invention. The process begins with a mobile device pairing with a target computing system and determining identifying information for the target computing system at 1205. One or more digital photographs including one or more documents, one or more screens of an application from the target computing system, or both, are taken at 1210. The mobile device extracts information from the digital photograph(s) using CV and OCR at 1215 by processing the photograph (e.g., determining text, graphical elements, document types, applications that are present on the screen, etc.), determines one or more target applications that the extracted information pertains to using a categorization AI model at 1220, and semantically matches the extracted information to respective fields in the one or more target applications using one or more semantic matching AI models at 1225. The AI models that perform the operations of steps 1215, 1220, and 1225 may be located on the mobile device, accessed remotely by the mobile device, or a combination thereof.

After this information has been determined, the mobile device transmits one or more identifications of the one or more target applications and the semantically matched information to the target computing system at 1230 via the pairing protocol. The semantically matched information is then copied to the target application(s) at 1235. If the user made corrections to the copied information at 1240, the corrections are sent to a cloud AI system at 1245 for retraining the AI model(s) that perform CV and OCR, the categorization AI model, and/or the semantic matching AI model.

In order to determine what is on the screen (i.e., which application(s) to copy information into on the target computing system), the center of the screen may be determined from a photograph or screenshot. For instance, ScreenPoint may be used to find the (x, y) coordinates of the centroid of an image (e.g., a mobile phone camera image) pointing at another image (e.g., a computer screen) using OpenCV SIFT. The code may be as follows:

```
import screenpoint
import cv2
# Load input images.
screen = cv2.imread('screen.png', 0)
view = cv2.imread('view.jpg', 0)
# Project view centroid to screen space.
# x and y are the coordinate of the 'view' centroid in 'screen' space.
x, y = screenpoint.project(view, screen)
```

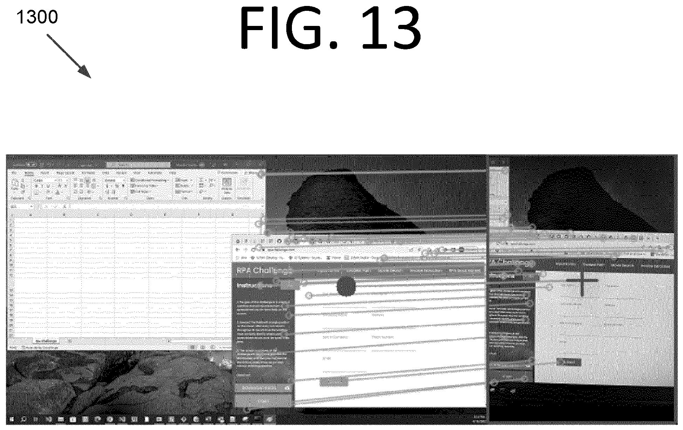

If enough unique elements can be identified in the original smartphone image and a full screen target device screenshot or photo, the middle point can be computed. See screenshot 1300 of FIG. 13.

In various embodiments of the present invention, the computer program(s) can be implemented in hardware, software, or a hybrid implementation. The computer program can be composed of modules that are in operative communication with one another, and which are designed to pass information or instructions to display. The computer program can be configured to operate on a general purpose computer, an ASIC, or any other suitable device.

It will be readily understood that the components of various embodiments of the present invention, as generally described and illustrated in the figures herein, may be arranged and designed in a wide variety of different configurations. Thus, the detailed description of the embodiments of the present invention, as represented in the attached figures, is not intended to limit the scope of the invention as claimed, but is merely representative of selected embodiments of the invention.

The features, structures, or characteristics of the invention described throughout this specification may be combined in any suitable manner in one or more embodiments. For example, reference throughout this specification to "certain embodiments," "some embodiments," or similar language means that a particular feature, structure, or characteristic described in connection with the embodiment is included in at least one embodiment of the present invention. Thus, appearances of the phrases "in certain embodiments," "in some embodiment," "in other embodiments," or similar language throughout this specification do not necessarily all refer to the same group of embodiments and the described features, structures, or characteristics may be combined in any suitable manner in one or more embodiments.

It should be noted that reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussion of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize that the invention can be practiced without one or more of the specific features or advantages of a particular embodiment. In other instances, additional features and advantages may be recognized in certain embodiments that may not be present in all embodiments of the invention.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the spirit and scope of the invention. In order to determine the metes and bounds of the invention, therefore, reference should be made to the appended claims.

**Claims**

1. One or more non-transitory computer-readable media storing one or more computer programs, the one or more computer programs configured to cause at least one processor to:

extract information from one or more digital photographs of one or more documents, one or more screens of an application from a target computing system, or both, via one or more artificial intelligence (AI) models configured to perform Computer Vision (CV) and Optical Character Recognition (OCR);

determine one or more target applications that the extracted information pertains to using a categorization AI model;

semantically match the extracted information to respective fields in the one or more target applications using one or more semantic matching AI models; and

transmit one or more identifications of the one or more target applications and the semantically matched information to a mobile device or the target computing system.

2. The one or more non-transitory computer-readable media of claim 1, wherein at least two of the one or more AI models configured to perform CV and OCR, the categorization AI model, and the semantic matching AI model are heads of a same generative AI model.

3. The one or more non-transitory computer-readable media of claim 1, wherein the one or more computer programs are further configured to cause the at least one processor to:

determine identifying information for the target computing system comprising an Internet Protocol (IP) address, a Media Access Control (MAC) address, or both; and

use the identifying information to transmit the one or more identifications of the one or more target applications and the semantically matched information to the target computing system.

4. The one or more non-transitory computer-readable media of claim 1, wherein the one or more computer programs are further configured to cause the at least one processor to:

pair the mobile device with the target computing system using a short-range wireless communication protocol;

determine identifying information for the target computing system; and

transmit the identifying information for the target computing system to one or more computing systems that are configured to perform the transmitting of the one or more identifications of the one or more target applications and the semantically matched information to the mobile device or the target computing system.

5. The one or more non-transitory computer-readable media of claim 4, wherein the one or more computer programs are further configured to cause the at least one processor to:

receive the transmit one or more identifications of the one or more target applications and the semantically matched information, by the mobile device; and

transmit the received one or more identifications of the one or more target applications and the semantically matched information to the target computing system.

6. The one or more non-transitory computer-readable media of claim 5, wherein the one or more computer programs are further configured to cause the at least one processor to:

receive the transmitted one or more identifications of the one or more target applications and the semantically matched information, by the target computing system; and

copy the semantically matched information to the one or more target applications on the target computing system.

7. The one or more non-transitory computer-readable media of claim 6, wherein the one or more computer programs are further configured to cause the at least one processor to:

receive one or more corrections to the copied information in the one or more target applications on the target computing system; and

transmit the one or more corrections to one or more servers of a cloud AI system for retraining at least one of the one or more AI models configured to perform CV and OCR, the categorization AI model, and the semantic matching AI model.

8. The one or more non-transitory computer-readable media of claim 1, wherein

the one or more AI models configured to perform CV and OCR, the categorization AI model, and the semantic

matching AI model are executed in series,
the categorization AI model receives output from the one or more AI models configured to perform CV and OCR, and
the semantic matching AI model receives output from both the categorization AI model and the one or more AI models configured to perform CV and OCR.

9. The one or more non-transitory computer-readable media of claim 1, wherein the determination of the one or more target applications that the extracted information pertains to comprises:

mapping elements found in the one or more digital photographs of the one or more documents, the one or more screens of the application, or both, to elements found in screens of one or more target applications;
generating confidence scores for the matches; and
identifying the one or more target applications based on the one or more confidence scores.

10. A computer-implemented method for performing artificial intelligence (AI)-driven, automatic data transfer comprising semantic associations between a source from a mobile device and a target computing system, comprising:

determining, by one or more computing systems, one or more target applications that information extracted from one or more digital photographs pertains to using a categorization AI model;
semantically matching the extracted information to respective fields in the one or more target applications, by the one or more computing systems, using one or more semantic matching AI models; and
transmitting one or more identifications of the one or more target applications and the semantically matched information, by the one or more computing systems, to a mobile device or the target computing system.

11. The computer-implemented method of claim 10, further comprising:

performing the extraction of the information from the one or more photographs, by the one or more computing systems, via one or more artificial intelligence (AI) models configured to perform Computer Vision (CV) and Optical Character Recognition (OCR), wherein
the one or more digital photographs comprise one or more documents, one or more screens of an application from the target computing system, or both.

12. The computer-implemented method of claim 11, wherein

the one or more AI models configured to perform CV and OCR, the categorization AI model, and the semantic matching AI model are executed in series,
the categorization AI model receives output from the one or more AI models configured to perform CV and OCR, and
the semantic matching AI model receives output from both the categorization AI model and the one or more AI models configured to perform CV and OCR.

13. The computer-implemented method of claim 10, wherein the categorization AI model and the semantic matching AI model are heads of a same generative AI model.

14. The computer-implemented method of claim 10, further comprising:

pairing the mobile device with the target computing system, by the mobile device and the target computing system, using a short-range wireless communication protocol;
determining identifying information for the target computing system, by the mobile device; and
transmitting the identifying information for the target computing system to the one or more computing systems, by the mobile device.

15. The computer-implemented method of claim 10, further comprising:

receiving the transmitted one or more identifications of the one or more target applications and the semantically matched information, by the mobile device; and
transmitting the received one or more identifications of the one or more target applications and the semantically matched information to the target computing system, by the mobile device.

EP 4 712 047 A1

# FIG. 1

100

# FIG. 2

# FIG. 3

300

# FIG. 4

400

Designer

410

420 User-Defined Activities

430 API-Driven Activities

440 AI/ML Activities

UI Automation Activities

460 Drivers

450

470 APIs

480 AI/ML Models

460

| OS | Browser | VM | Enterprise |

462 464 466 468

# FIG. 5

500

Display
525

Keyboard
530

Cursor
Control
Device
535

Communication
Device
520

Processor(s)
510

Bus
505

545

540

550

Operating
System

Automatic Data
Transfer and/or
Recognition
Module

Other Functional
Modules

Memory   515

# FIG. 6A

600

| | Input | Hidden | Hidden | | Output |
|---|---|---|---|---|---|
| Inputs | Layer | Layer 1 | Layer 2 | ... | Layer |

Document Images

Screen Images

Application Schema and Format Information

Semantic Association Information

*FROM LAST HIDDEN LAYER*

Suggested Application Types

Application Type Confidence Scores

Extracted Information

Confidence Scores for Extracted Information

# FIG. 6B

# FIG. 7

700

```
                    710
┌──────────────────────────┐              ┌──────────────┐    720
│     Document Images       │              │ Train AI/ML  │
│      Screen Images        │─────────────▶│    Model     │
│ App Schema and Format Info│              └──────────────┘
│  Semantic Association Info │                    │
└──────────────────────────┘                     ▼
                                          ┌──────────────┐    730
                                          │Review Results│
                                          └──────────────┘
                                                  │
      ┌──────────────┐    750                     ▼
      │  Supplement  │              ◇ Threshold      740
      │Training Data and/│◀──NO──  ◇   Met?  ◇
      │or Modify Reward│              ◇
      │   Function   │                     │ YES
      └──────────────┘                     ▼
                                   ┌──────────────┐    760
                                   │   Test on    │
                                   │  Evaluation  │
                                   │     Data     │
                                   └──────────────┘
                                          │
                                          ▼
                          ◇ Threshold     770
              ◀──NO──    ◇    Met?   ◇
                                          │
              ┌──────────────┐  780       │
              │ Deploy AI/ML │◀──YES──────┘
              │    Model     │
              └──────────────┘
```

# FIG. 8

# FIG. 9

900

902

910

Excel

Pair

980

904

912

906

914

970

Gen AI

Gen AI

Gen AI

Gen AI

972

920

934

932

AI   AI   AI   AI

940

930

# FIG. 10

1000

1010

1012

1030

1034

Excel

1040

Pair

AI

Gen
AI

AI

1020

1022

1032

# FIG. 11

1100

START

Pair with Target Computing
System and Determine
Identifying Information
— 1105

Transmit Identifying
Information to Cloud AI
System
— 1110

Take and Transmit Digital
Photograph(s) to Cloud AI
System
— 1115

Extract Information from
Digital Photograph(s) Using
CV and OCR
— 1120

Determine Target
Application(s) from
Extracted Information
— 1125

Semantically Match
Extracted Information
— 1130

END

Send Corrections and
Retrain AI Model(s)
1155

YES

Changes?
1150

NO

Copy Semantically Matched
Information to Target
Application(s)
1145

Pair and Transmit to Target
Computing System
1140

Transmit Identifications and
Semantically Matched
Information
1135

# FIG. 12

1200

START

Pair with Target Computing System and Determine Identifying Information — 1205

Take Digital Photograph(s) — 1210

Extract Information from Digital Photograph(s) Using CV and OCR — 1215

Determine Target Application(s) from Extracted Information — 1220

Semantically Match Extracted Information — 1225

Transmit Semantically Matched Information to Target Computing System — 1230

END

Send Corrections and Retrain AI Model(s)

1245

YES

Changes? — 1240

NO

Copy Semantically Matched Information to Target Application(s)

1235

1300

# FIG. 13

Europäisches
Patentamt

European
Patent Office

Office européen
des brevets

# EUROPEAN SEARCH REPORT

**Application Number**

EP 25 20 2055

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 830 756 B1 (INTUIT INC [US]) 15 May 2024 (2024-05-15) <br><br> * the whole document * <br> ----- | 1,3-6,8, 10-12, 14,15 | INV. <br> G06V10/82 <br> G06V30/412 <br> G06V30/418 |
| X | US 2023/415338 A1 (DINES DANIEL [US]) 28 December 2023 (2023-12-28) <br><br> * the whole document * <br> ----- | 1,3-7, 9-11,14, 15 | |
| A | US 2023/107316 A1 (RIPA BOGDAN [RO] ET AL) 6 April 2023 (2023-04-06) <br> * the whole document * <br> ----- | 1-15 | |
| A | US 2019/303447 A1 (MOHIUDDIN KHAN GHULAM [IN] ET AL) 3 October 2019 (2019-10-03) <br> * the whole document * <br> ----- | 1-15 | |
| A | US 2023/053464 A1 (NARAYAN ANSHUMAN [US] ET AL) 23 February 2023 (2023-02-23) <br> * the whole document * <br> ----- | 1-15 | **TECHNICAL FIELDS SEARCHED (IPC)** <br><br> G06V |

The present search report has been drawn up for all claims

| Place of search | Date of completion of the search | Examiner |
|---|---|---|
| The Hague | 14 January 2026 | Rajadell Rojas, Olga |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 2055

This annex lists the patent family members relating to the patent documents cited in  the above-mentioned European search report.
The members are as contained in the European Patent Office EDP file on
The European Patent Office is in no way liable for these particulars which are merely given for the purpose of information.

14-01-2026

| Patent document cited in search report | | Publication date | Patent family member(s) | | Publication date |
|---|---|---|---|---|---|
| EP 3830756 | B1 | 15-05-2024 | AU | 2019314245 A1 | 06-08-2020 |
| | | | CA | 3088686 A1 | 06-02-2020 |
| | | | EP | 3830756 A1 | 09-06-2021 |
| | | | US | 2020042645 A1 | 06-02-2020 |
| | | | WO | 2020028109 A1 | 06-02-2020 |
| US 2023415338 | A1 | 28-12-2023 | US | 2023415338 A1 | 28-12-2023 |
| | | | US | 2023419161 A1 | 28-12-2023 |
| US 2023107316 | A1 | 06-04-2023 | CN | 115952966 A | 11-04-2023 |
| | | | EP | 4163784 A1 | 12-04-2023 |
| | | | JP | 2023055215 A | 17-04-2023 |
| | | | US | 2023107233 A1 | 06-04-2023 |
| | | | US | 2023107316 A1 | 06-04-2023 |
| US 2019303447 | A1 | 03-10-2019 | NONE | | |
| US 2023053464 | A1 | 23-02-2023 | NONE | | |

EPO FORM P0459

For more details about this annex : see Official Journal of the European Patent Office, No. 12/82

**EP 4 712 047 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20230108015
- US 20230107316
- US 20230415338
- US 10860905 B
- US 11733668 B